# EUROPEAN PATENT APPLICATION

(11) **EP 4 692 988 A1**
(43) Date of publication of application: **11.02.2026**
(21) Application number: 24807359.5
(22) Date of filing: 09.04.2024
(51) Int. Cl.: G06F 1/26, G06F 1/30, G06F 1/28, G06F 1/16, G06F 11/32, G06F 11/30

(54) **FOLDABLE ELECTRONIC DEVICE INCLUDING PLURALITY OF BATTERY MODULES AND OPERATING METHOD THEREOF**

(30) Priority: 17.05.2023 KR 20230063687; 12.06.2023 KR 20230074984
(71) Applicant: Samsung Electronics Co., Ltd., Suwon-si, Gyeonggi-do 16677 (KR)
(72) Inventor: KIM, Seunghun, Suwon-si, Gyeonggi-do 16677 (KR); KIM, Jeongseob, Suwon-si, Gyeonggi-do 16677 (KR); PARK, Sungwu, Suwon-si, Gyeonggi-do 16677 (KR); SEO, Pilwon, Suwon-si, Gyeonggi-do 16677 (KR); CHO, Hyongrae, Suwon-si, Gyeonggi-do 16677 (KR); HAN, Junhee, Suwon-si, Gyeonggi-do 16677 (KR)
(74) Representative: Gulde & Partner
(86) International application number: PCT/KR2024/004745
(87) International publication number: WO 2024/237479

(57) **Abstract**

A foldable electronic device according to an embodiment of the present disclosure has battery protection circuits of a first battery module and a second battery module connected to a flexible printed circuit board (FPCB) so as to enable the first and second battery modules to be used as one battery module, includes a first switching circuit for controlling the first battery module and a second switching circuit for controlling the second battery module, and may control the first switching circuit or the second switching circuit on the basis of a difference between a first voltage of the first battery module and a second voltage of the second battery module, to thereby cut off the power to the first battery module or the second battery module.

## Description

### [Technical Field]

Embodiments of the present disclosure relate to a foldable electronic device including a plurality of battery modules and an operating method thereof.

### [Background Art]

An electronic device is a foldable electronic device and may include a foldable housing that may be folded or unfolded. For example, a foldable housing may include two housings disposed to be foldable with respect to a folding axis. The foldable electronic device may include a first battery module and a second battery module disposed in an internal space of each housing. For example, the first battery module is electrically connected to a substrate disposed in the internal space of the first housing, and the second battery module is electrically connected to a substrate disposed in the internal space of the second housing, thereby supplying power to components disposed in the internal space of the foldable electronic device. In addition, the foldable electronic device may match a voltage level of the first battery module and a voltage level of the second battery module through an additional configuration such as a limiter.

The information described above may be provided as the related art for the purpose of enhancing the understanding of the present disclosure. No assertion or determination is made with respect to the applicability of any of the above-mentioned as the prior art related to the present disclosure.

### [Disclosure of Invention]

### [Technical Problem]

However, in a case of being provided with an additional configuration such as a limiter, not only a technology for controlling a plurality of battery modules is required, but also complexity may increase and material cost may rise.

A foldable electronic device according to one embodiment of the present disclosure may connect a battery protection circuit of each battery module with a flexible printed circuit board (FPCB) so as to be used as one battery module. In addition, the foldable electronic device, by being provided with a first switching circuit for controlling the first battery module and a second switching circuit for controlling the second battery module, may compare a voltage of the first battery module and a voltage of the second battery module, and in a case of a problem occurring in any one of the battery module and/or the FPCB, may control the first switching circuit or the second switching circuit so as to cut off power of the battery module in which the problem occurs.

### [Solution to Problem]

A foldable electronic device, according to one embodiment of the present disclosure, may include a first housing, a hinge module, and a second housing mutually rotatably connected to the first housing through the hinge module. The foldable electronic device according to one embodiment may include a main substrate disposed in an internal space of the first housing. The foldable electronic device according to one embodiment may include a first battery module disposed in the internal space of the first housing and including a first battery circuit substrate. The foldable electronic device according to one embodiment may include a second battery module disposed in an internal space of the second housing and including a second battery circuit substrate. The foldable electronic device according to one embodiment may include a first FPCB electrically connecting the main substrate and the first battery circuit substrate. The foldable electronic device according to one embodiment may include a second FPCB electrically connecting the first battery circuit substrate and the second battery circuit substrate. The foldable electronic device according to one embodiment may include a first switching circuit for controlling an electrical connection between the first battery module and the main substrate. The foldable electronic device according to one embodiment may include a second switching circuit for controlling an electrical connection between the second battery module and the main substrate. The foldable electronic device according to one embodiment may include a control circuit disposed on the first battery circuit substrate. The control circuit according to one embodiment may control the first switching circuit or the second switching circuit based on a difference between a first voltage of the first battery module and a second voltage of the second battery module to cut off power of the first battery module or the second battery module.

A foldable electronic device, according to one embodiment of the present disclosure, may include a first housing, a hinge module, and a second housing mutually rotatably connected to the first housing through the hinge module. The foldable electronic device according to one embodiment may include a main substrate disposed in an internal space of the first housing. The foldable electronic device according to one embodiment may include a first battery module disposed in the internal space of the first housing and including a first battery circuit substrate. The foldable electronic device according to one embodiment may include a second battery module disposed in an internal space of the second housing and including a second battery circuit substrate. The foldable electronic device according to one embodiment may include a first FPCB electrically connecting the main substrate and the first battery circuit substrate. The foldable electronic device according to one embodiment may include a second FPCB electrically connecting the first battery circuit substrate and the second battery circuit substrate. The foldable electronic device according to one embodiment may include a switching circuit for controlling an electrical connection between the second battery module and the main substrate. The foldable electronic device according to one embodiment may include a control circuit disposed on the first battery circuit substrate. The control circuit according to one embodiment may control the switching circuit to cut off power of the second battery module, based on a difference between the first voltage of the first battery module and the second voltage of the second battery module.

A method of operating a foldable electronic device including a plurality of battery modules according to one embodiment of the present disclosure may include: controlling the first switching circuit or the second switching circuit to cut off power of the first battery module or the second battery module, based on a difference between the first voltage of the first battery module and the second voltage of the second battery module.

According to one embodiment of the present disclosure, a non-transitory computer-readable storage medium (or computer program product) storing one or more programs may be described. One or more programs according to one embodiment may include an instruction which, when executed by a control circuit of a foldable electronic device, is configured to control the first switching circuit or the second switching circuit to cut off power of the first battery module or the second battery module, based on a difference between the first voltage of the first battery module and the second voltage of the second battery module.

### [Advantageous Effects of Invention]

A foldable electronic device according to one embodiment of the present disclosure, by controlling a first switching circuit or a second switching circuit so as to cut off power of a battery module in which a problem occurs, in case of a problem occurring in any one battery module and/or the FPCB by comparing a voltage of a first battery module and a voltage of a second battery module, may prevent a phenomenon such as rapid discharge of any one battery module in which the problem occurs.

A foldable electronic device according to one embodiment of the present disclosure may provide a notification indicating that an abnormality has occurred in any one battery module, and accordingly, a user of the foldable electronic device may intuitively identify a situation in which an abnormality has occurred in any one battery module.

### [Brief Description of Drawings]

FIG. 1 is a block diagram of an electronic device in a network environment according to one embodiment of the present disclosure.
FIGS. 2A and 2B are views of an unfolded state of an electronic device (e.g., a foldable electronic device), according to one embodiment of the present disclosure, viewed from the front and rear.
FIGS. 3A and 3B are views of a folded state of an electronic device, according to one embodiment of the present disclosure, viewed from the front and rear.
FIG. 4 is an exploded perspective view schematically illustrating an electronic device, according to one embodiment of the present disclosure.
FIG. 5 is a block diagram illustrating a foldable electronic device according to one embodiment of the present disclosure.
FIG. 6 is a block diagram schematically illustrating a foldable electronic device including a plurality of battery modules according to one embodiment of the present disclosure.
FIG. 7 is a block diagram schematically illustrating a foldable electronic device including a plurality of battery modules according to one embodiment of the present disclosure.
FIG. 8 is a circuit diagram embodying a control circuit according to one embodiment of the present disclosure.
FIG. 9 is a view for describing an operating method of a foldable electronic device including a plurality of battery modules according to one embodiment of the present disclosure.
FIG. 10 is a flowchart for describing an operating method of a foldable electronic device including a plurality of battery modules according to one embodiment of the present disclosure.
FIG. 11 is a flowchart embodying the above-mentioned operations in FIG. 10 according to one embodiment of the present disclosure.
FIG. 12 is a view for describing an operating method of a foldable electronic device including a plurality of battery modules according to one embodiment of the present disclosure.
FIG. 13 is a view for describing an operating method of a foldable electronic device including a plurality of battery modules according to one embodiment of the present disclosure.
FIG. 14 is a flowchart for describing an operating method of a foldable electronic device including a plurality of battery modules according to one embodiment of the present disclosure.

### [Mode for the Invention]

Hereinafter, embodiments of the disclosure will be described in detail with reference to the accompanying drawings so that those skilled in the art can easily implement the invention. However, the disclosure may be implemented in various forms and is not limited to the embodiments described herein. In connection with the description of the drawings, the same or similar reference numerals may be used for the same or similar components. In addition, well-known functions and configurations may be omitted in the drawings and related description for clarity and brevity.

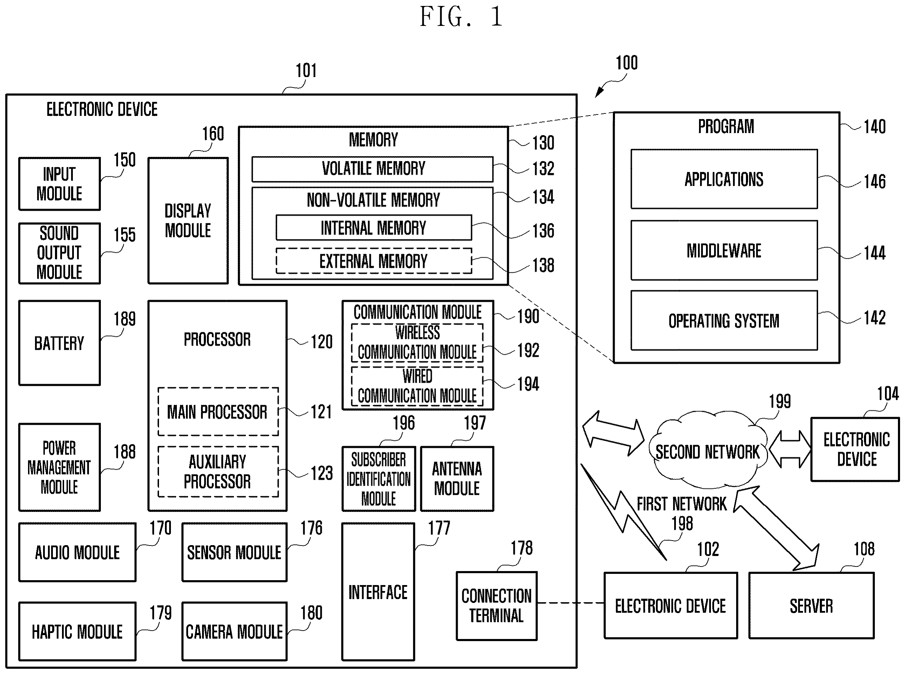

FIG. 1 is a block diagram illustrating an electronic device 101 in a network environment 100 according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and/or an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., through wires) or wirelessly. According to an embodiment, the interface 177 may include, for example, a high-definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., an application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, Wi-Fi direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., an mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

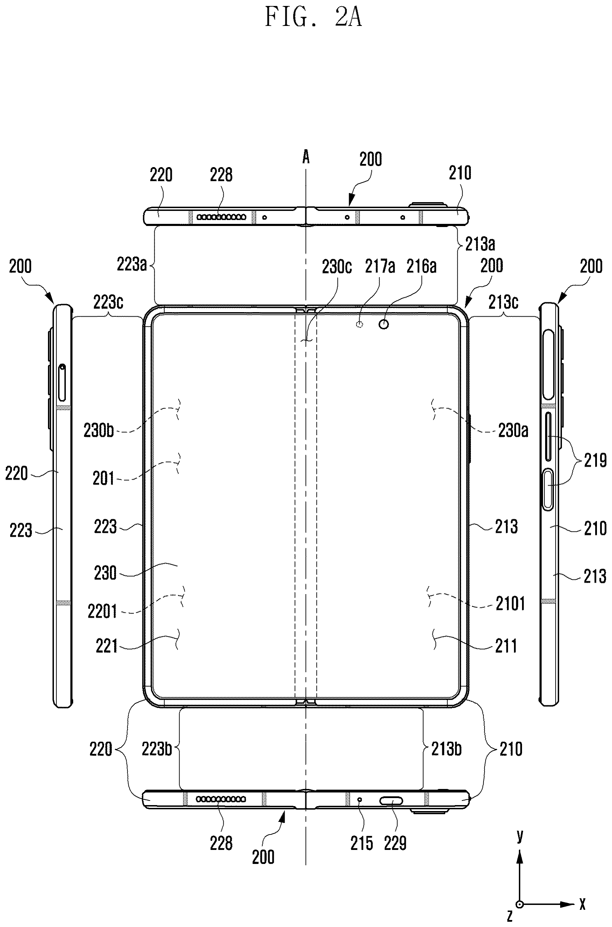

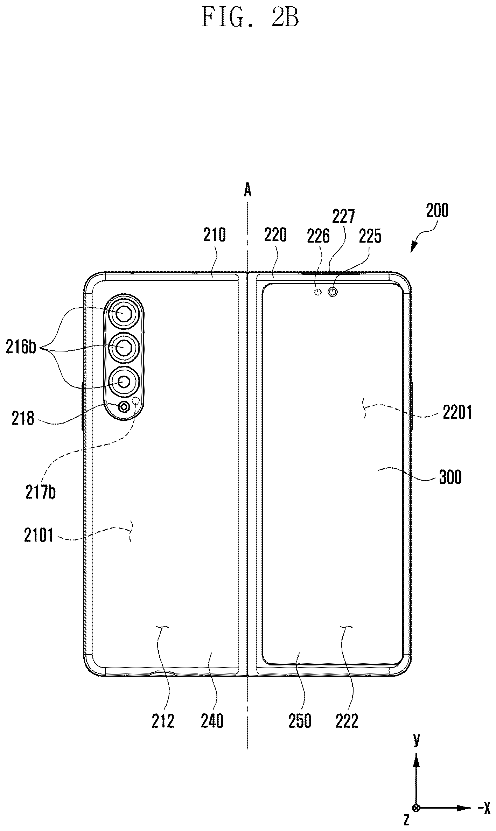

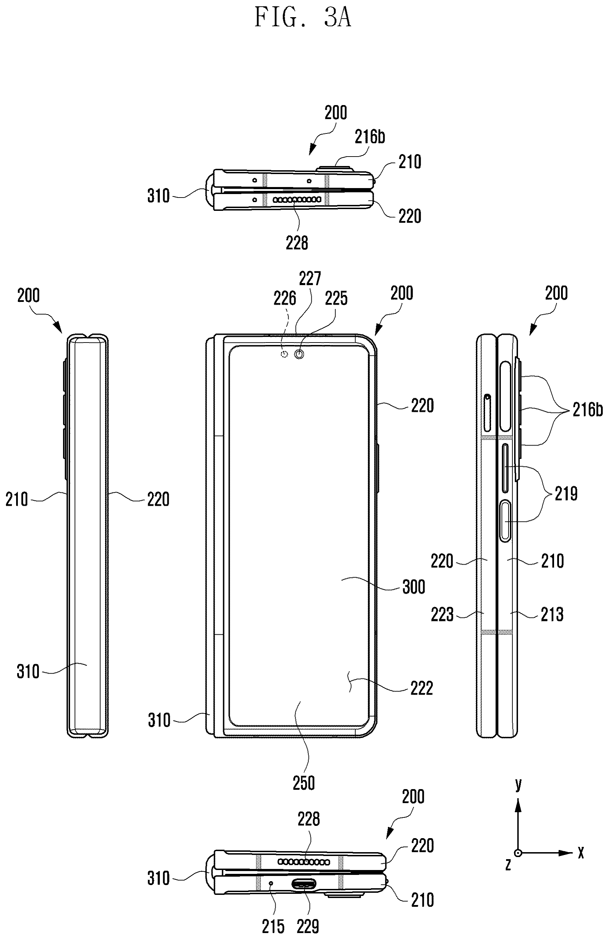

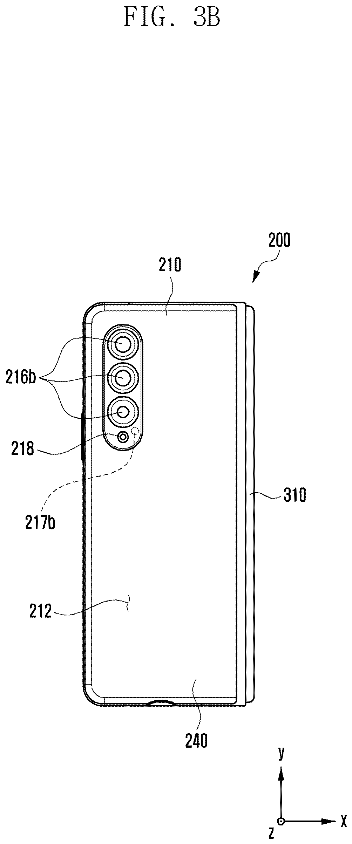

FIGS. 2A and 2B are front and rear views illustrating an unfolding state of an electronic device (e.g., a foldable electronic device) according to various embodiments of the disclosure. FIGS. 3A and 3B are front and rear views illustrating a folding state of an electronic device according to various embodiments of the disclosure.

According to various embodiments, the embodiments disclosed in FIG. 1 may be included in the embodiments disclosed in FIGS. 2A to 3B. For example, the electronic device 200 illustrated in FIGS. 2A to 3B may include the processor 120, the memory 130, the input module 150, the sound output module 155, the display module 160, the audio module 170, the sensor module 176, the interface 177, the connection terminal 178, the haptic module 179, the camera module 180, the antenna module 197, and/or the subscriber identification module 196, which are illustrated in FIG. 1. The electronic device shown in FIGS. 2A to 3B may include the foldable electronic device 200.

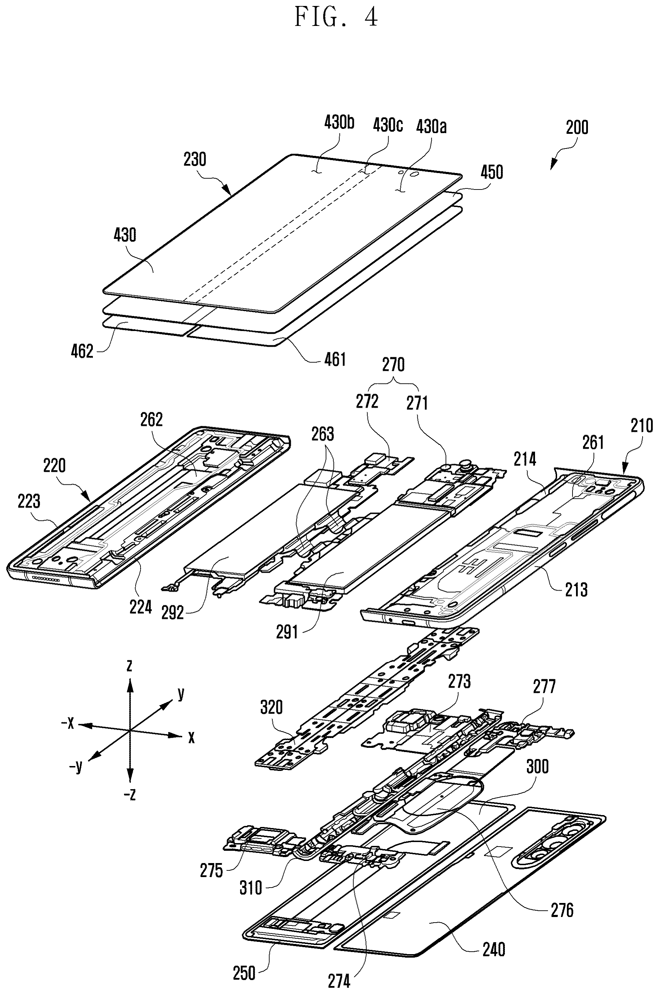

With reference to FIGS. 2A to 3B, the electronic device 200 (e.g., the foldable electronic device) according to various embodiments of the disclosure may include a pair of housings 210 and 220 (e.g., a foldable housing structure) rotatably coupled with respect to a folding axis A through a hinge device (e.g., a hinge plate 320 in FIG. 4) (e.g., a hinge module) so as to be foldable with respect to each other, a flexible display 230 (e.g., a first display, a foldable display, or a main display) disposed through the pair of housings 210 and 220, and/or a sub-display 300 (e.g., a second display) disposed through the second housing 220.

According to various embodiments, the hinge device (e.g., the hinge plate 320 in FIG. 4) may be disposed at least in part to be invisible from the outside through the first housing 210 and the second housing 220, and in the unfolding state, to be invisible from the outside through a hinge cover 310 (e.g., a hinge housing) that covers a foldable portion. In the disclosure, a surface on which the flexible display 230 is disposed may be defined as the front surface of the electronic device 200, and a surface opposite to the front surface may be defined as the rear surface of the electronic device 200. A surface surrounding a space between the front surface and the rear surface may be defined as a side surface of the electronic device 200.

According to various embodiments, the pair of housings 210 and 220 may include a first housing 210 and a second housing 220, which are foldably disposed with respect to each other through the hinge device (e.g., the hinge plate 320 in FIG. 4). Without being limited to the shape and combination shown in FIGS. 2A to 3B, the pair of housings 210 and 220 may be implemented with any other shape and/or any other combination of components. The first and second housings 210 and 220 may be disposed on both sides with respect to the folding axis A and may have an overall symmetrical shape with respect to the folding axis A. According to some embodiments, the first and second housings 210 and 220 may be folded asymmetrically with respect to the folding axis A. Depending on whether the electronic device 200 is in the unfolding state, the folding state, or an intermediate state, the first and second housings 210 and 220 may have different angles or distances therebetween.

According to various embodiments, the first housing 210 is connected to the hinge device (e.g., the hinge plate 320 in FIG. 4) in the unfolding state of the electronic device 200, and may have a first surface 211 disposed to face the front of the electronic device 200, a second surface 212 facing a direction opposite to the first surface 211, and/or a first side member 213 surrounding at least a portion of a first space between the first surface 211 and the second surface 212. According to one embodiment, the first side member 213 may include a first side 213a having a first length along a first direction (e.g., the x-axis direction), a second side 213c extending from the first side 213a to have a second length longer than the first length along a direction (e.g., the negative y-axis direction) substantially perpendicular to the first side 213a, and a third side 213b extending from the second side 213c substantially parallel to the first side 213a and having the first length.

According to various embodiments, the second housing 220 is connected to the hinge device (e.g., the hinge plate 320 in FIG. 4) in the unfolding state of the electronic device 200, and may have a third surface 221 disposed to face the front of the electronic device 200, a fourth surface 222 facing a direction opposite to the third surface 221, and/or a second side member 223 surrounding at least a portion of a second space between the third surface 221 and the fourth surface 222. According to one embodiment, the second side member 223 may include a first side 223a having a first length along a first direction (e.g., the x-axis direction), a second side 223c extending from the first side 223a to have a second length longer than the first length along a direction (e.g., the negative y-axis direction) substantially perpendicular to the first side 212a, and a third side 223b extending from the second side 223c substantially parallel to the first side 223a and having the first length.

According to various embodiments, the first surface 211 faces substantially the same direction as the third surface 221 in the unfolding state, and at least partially faces the third surface 221 in the folding state.

According to various embodiments, the electronic device 200 may include a recess 201 formed to receive the flexible display 230 through structural coupling of the first and second housings 210 and 220. The recess 201 may have substantially the same size as the flexible display 230.

According to various embodiments, the hinge cover 310 (e.g., a hinge housing) may be disposed between the first housing 210 and the second housing 220. The hinge cover 310 may be disposed to cover a portion (e.g., at least one hinge module) of the hinge device (e.g., the hinge plate 320 in FIG. 4). Depending on whether the electronic device 200 is in the unfolding state, the folding state, or the intermediate state, the hinge cover 310 may be covered by a portion of the first and second housings 210 and 220 or exposed to the outside.

According to various embodiments, when the electronic device 200 is in the unfolding state, at least a portion of the hinge cover 310 may be covered by the first and second housings 210 and 220 and thereby not be substantially exposed. When the electronic device 200 is in the folding state, at least a portion of the hinge cover 310 may be exposed to the outside between the first and second housings 210 and 220. In case of the intermediate state in which the first and second housings 210 and 220 are folded with a certain angle, the hinge cover 310 may be exposed at least in part to the outside of the electronic device 200 between the first and second housings 210 and 220. In this state, the area in which the hinge cover 310 is exposed to the outside may be smaller than that in the fully folding state. The hinge cover 310 may have at least in part a curved surface.

According to various embodiments, when the electronic device 200 is in the unfolding state (e.g., the state shown in FIGS. 2A and 2B), the first and second housings 210 and 220 may form an angle of about 180 degrees, and a first area 230a, a second area 230b, and a folding area 230c of the flexible display 230 may be disposed to form the same plane and to face substantially the same direction (e.g., the z-axis direction). In another embodiment, when the electronic device 200 is in the unfolding state, the first housing 210 may be rotated at an angle of about 360 degrees with respect to the second housing 220 and folded in the opposite direction so that the second surface 212 and the fourth surface 222 face each other (e.g., the out-folding style).

According to various embodiments, when the electronic device 200 is in the folding state (e.g., the state shown in FIGS. 3A and 3B), the first surface 211 of the first housing 210 and the third surface 221 of the second housing 220 may be disposed to face each other. In this case, the first area 230a and the second area 230b of the flexible display 230 may be disposed to face each other while forming a narrow angle (e.g., a range of 0 degrees to about 10 degrees) therebetween through the folding area 230c.

According to various embodiments, the folding area 230c may be deformed at least in part into a curved shape having a predetermined curvature. When the electronic device 200 is in the intermediate state, the first and second housings 210 and 220 may be disposed at a certain angle to each other. In this case, the first area 230a and the second area 230b of the flexible display 230 may form an angle greater than in the folding state and smaller than in the unfolding state, and the curvature of the folding area 230c may be smaller than in the folding state and greater than in the unfolding state.

According to various embodiments, the first and second housings 210 and 220 may stop (e.g., a free stop function) at an angle designated between the folding state and the unfolding state through the hinge device (e.g., the hinge plate 320 in FIG. 4). In some embodiments, the first and second housings 210 and 220 may be continuously operated at designated inflection angles through the hinge device (e.g., the hinge plate 320 in FIG. 4) while being pressed in the unfolding direction or the folding direction.

According to various embodiments, the electronic device 200 may include at least one of at least one display (e.g., the flexible display 230 and the sub-display 300), an input device 215, sound output devices 227 and 228, sensor modules 217a, 217b, and 226, camera modules 216a, 216b, and 225, a key input device 219, an indicator (not shown), and a connector port 229, which are disposed in the first housing 210 and/or the second housing 220. In some embodiments, the electronic device 200 may omit at least one of the above-described components or further include other components.

According to various embodiments, the at least one display (e.g., the flexible display 230 and the sub-display 300) may include the flexible display 230 (e.g., the first display) supported through the first surface 211 of the first housing 210, the hinge device (e.g., the hinge plate 320 in FIG. 4), and the third surface 221 of the second housing 220, and the sub-display 300 (e.g., the second display) disposed to be visible at least in part to the outside through the fourth surface 222 in an inner space of the second housing 220. In some embodiments, the sub-display 300 may be disposed to be visible to the outside through the second surface 212 in an inner space of the first housing 210. According to an embodiment, the flexible display 230 may be mainly used in the unfolding state of the electronic device 200, and the sub-display 300 may be mainly used in the folding state of the electronic device 200. According to an embodiment, in case of the intermediate state, the electronic device 200 may control the flexible display 230 and/or the sub-display 300 to be useable, based on the folding angles between the first and second housings 210 and 220.

According to various embodiments, the flexible display 230 may be disposed in an accommodation space formed by the pair of housings 210 and 220. For example, the flexible display 230 may be disposed in the recess 201 formed by the pair of housings 210 and 220, and in the unfolding state, arranged to occupy substantially most of the front surface of the electronic device 200. According to an embodiment, the flexible display 230 may be changed in shape to a flat surface or a curved surface in at least a partial area. The flexible display 230 may have a first area 230a facing the first housing 210, a second area 230b facing the second housing 220, and a folding area 230c connecting the first area 230a and the second area 230b and facing the hinge device (e.g., the hinge plate 320 in FIG. 4). According to an embodiment, the area division of the flexible display 230 is only an exemplary physical division by the pair of housings 210 and 220 and the hinge device (e.g., the hinge plate 320 in FIG. 4), and substantially the flexible display 230 may be realized as one seamless full screen over the pair of housings 210 and 220 and the hinge device (e.g., the hinge plate 320 in FIG. 4). The first area 230a and the second area 230b may have an overall symmetrical shape or a partially asymmetrical shape with respect to the folding area 230c.

According to various embodiments, the electronic device 200 may include a first rear cover 240 disposed on the second surface 212 of the first housing 210 and a second rear cover 250 disposed on the fourth surface 222 of the second housing 220. In some embodiments, at least a portion of the first rear cover 240 may be integrally formed with the first side member 213. In some embodiments, at least a portion of the second rear cover 250 may be integrally formed with the second side member 223. According to an embodiment, at least one of the first rear cover 240 and the second rear cover 250 may be formed with a substantially transparent plate (e.g., a glass plate having various coating layers, or a polymer plate) or an opaque plate.

According to various embodiments, the first rear cover 240 may be formed with an opaque plate such as, for example, coated or colored glass, ceramic, polymer, metal (e.g., aluminum, stainless steel (STS), or magnesium), or any combination thereof. The second rear cover 250 may be formed with a substantially transparent plate such as glass or polymer, for example. In this case, the second display 300 may be disposed to be visible from the outside through the second rear cover 250 in the inner space of the second housing 220.

According to various embodiments, the input device 215 may include a microphone. In some embodiments, the input device 215 may include a plurality of microphones arranged to detect the direction of sound.

According to various embodiments, the sound output devices 227 and 228 may include speakers. According to an embodiment, the sound output devices 227 and 228 may include a receiver 227 for a call disposed through the fourth surface 222 of the second housing 220, and an external speaker 228 disposed through at least a portion of the second side member 223 of the second housing 220. In some embodiments, the input device 215, the sound output devices 227 and 228, and the connector 229 may be disposed in spaces of the first housing 210 and/or the second housing 220 and exposed to the external environment through at least one hole formed in the first housing 210 and/or the second housing 220. In some embodiments, the holes formed in the first housing 210 and/or the second housing 220 may be commonly used for the input device 215 and the sound output devices 227 and 228. In some embodiments, the sound output devices 227 and 228 may include a speaker (e.g., a piezo speaker) that is operated without holes formed in the first housing 210 and/or the second housing 220.

According to various embodiments, the camera modules 216a, 216b, and 225 may include a first camera module 216a disposed on the first surface 211 of the first housing 210, a second camera module 216b disposed on the second surface 212 of the first housing 210, and/or a third camera module 225 disposed on the fourth surface 222 of the second housing 220. According to an embodiment, the electronic device 200 may include a flash 218 disposed near the second camera module 216b. The flash 218 may include, for example, a light emitting diode or a xenon lamp. According to an embodiment, the camera modules 216a, 216b, and 225 may include one or more lenses, an image sensor, and/or an image signal processor. In some embodiments, at least one of the camera modules 216a, 216b, and 225 may include two or more lenses (e.g., wide-angle and telephoto lenses) and image sensors and may be disposed together on one surface of the first housing 210 and/or the second housing 220.

According to various embodiments, the sensor modules 217a, 217b, and 226 may generate an electrical signal or data value corresponding to an internal operating state of the electronic device 200 or an external environmental state. According to an embodiment, the sensor modules 217a, 217b, and 226 may include a first sensor module 217a disposed on the first surface 211 of the first housing 210, a second sensor module 217b disposed on the second surface 212 of the first housing 210, and/or a third sensor module 226 disposed on the fourth surface 222 of the second housing 220. In some embodiments, the sensor modules 217a, 217b, and 226 may include at least one of a gesture sensor, a grip sensor, a color sensor, an infrared (IR) sensor, an illumination sensor, an ultrasonic sensor, an iris recognition sensor, or a distance detection sensor (e.g., a time of flight (TOF) sensor or a light detection and ranging (LiDAR)).

According to various embodiments, the electronic device 200 may further include an unillustrated sensor module, for example, at least one of a barometric pressure sensor, a magnetic sensor, a biometric sensor, a temperature sensor, a humidity sensor, or a fingerprint recognition sensor. In some embodiments, the fingerprint recognition sensor may be disposed through at least one of the first side member 213 of the first housing 210 and/or the second side member 223 of the second housing 220.

According to various embodiments, the key input device 219 may be disposed to be exposed to the outside through the first side member 213 of the first housing 210. In some embodiments, the key input device 219 may be disposed to be exposed to the outside through the second side member 223 of the second housing 220. In some embodiments, the electronic device 200 may not include some or all of the key input devices 219, and the non-included key input device may be implemented in another form, such as a soft key, on at least one of the displays 230 and 300. In another embodiment, the key input device 219 may be implemented using a pressure sensor included in at least one of the displays 230 and 300.

According to various embodiments, the connector port 229 may include a connector (e.g., a USB connector or an interface connector port module (IF module)) for transmitting and receiving power and/or data to and from an external electronic device (e.g., the external electronic device 102, 104, or 108 in FIG. 1). In some embodiments, the connector port 229 may also perform a function of transmitting and receiving an audio signal to and from an external electronic device or further include a separate connector port (e.g., an ear jack hole) for performing the function of audio signal transmission and reception.

According to various embodiments, at least one 216a, 225 of the camera modules 216a, 216b, and 225, at least one 217a, 226 of the sensor modules 217a, 217b, and 226, and/or the indicator may be arranged to be exposed through at least one of the displays 230 and 300. For example, the at least one camera module 216a and/or 225, the at least one sensor module 217a and/or 226, and/or the indicator may be disposed under an active area (display area) of at least one of the displays 230 and 300 in the inner space of at least one of the housings 210 and 220 so as to be in contact with the external environment through a transparent region or an opening perforated up to a cover member (e.g., a window layer (not shown) of the flexible display 230 and/or the second rear cover 250). According to an embodiment, a region where the display 230 or 300 and the camera module 216a or 225 face each other is a part of the display area and may be formed as a transmissive region having a certain transmittance. According to an embodiment, the transmissive region may be formed to have a transmittance in a range of about 5% to about 20%. The transmissive region may have an area that overlaps with an effective area (e.g., an angle of view area) of the camera module 216a or 225 through which light for generating an image at an image sensor passes. For example, the transmissive region of the at least one display 230 and/or 300 may have an area having a lower density of pixels than the surrounding area. For example, the transmissive region may replace the opening. For example, the at least one camera module 216a and/or 225 may include an under display camera (UDC) or an under panel camera (UPC). In another embodiment, some camera modules or sensor modules 217a and 226 may be disposed to perform their functions without being visually exposed through the display. For example, a region facing the camera modules 216a and 225 and/or the sensor modules 217a and 226 disposed under the at least one display 230 and/or 300 (e.g., a display panel) has an under display camera (UDC) structure that may not require a perforated opening.

FIG. 4 is an exploded perspective view schematically illustrating an electronic device 200 according to various embodiments of the disclosure.

With reference to FIG. 4, the electronic device 200 may include a flexible display 230 (e.g., a first display), a sub-display 300 (e.g., a second display), a hinge plate 320, a pair of support members (e.g., a first support member 261, a second support member 262), at least one substrate 270 (e.g., a printed circuit board (PCB)), a first housing 210, a second housing 220, a first rear cover 240, and/or a second rear cover 250.

According to various embodiments, the flexible display 230 may include a display panel 430 (e.g., a flexible display panel), a support plate 450 disposed under (e.g., in the negative z-axis direction) the display panel 430, and a pair of metal plates 461 and 462 disposed under (e.g., in the negative z-axis direction) the support plate 450.

According to various embodiments, the display panel 430 may include a first panel area 430a corresponding to a first area (e.g., the first area 230a in FIG. 2A) of the flexible display 230, a second panel area 430b extending from the first panel area 430a and corresponding to a second area (e.g., the second area 230b in FIG. 2A) of the flexible display 230, and a third panel area 430c connecting the first panel area 430a and the second panel area 430b and corresponding to a folding area (e.g., the folding area 230c in FIG. 2A) of the flexible display 230.

According to various embodiments, the support plate 450 may be disposed between the display panel 430 and the pair of support members 261 and 262 and formed to have a material and shape for providing a planar support structure for the first and second panel areas 430a and 430b and providing a bendable structure to aid in flexibility of the third panel region 430c. According to an embodiment, the support plate 450 may be formed of a conductive material (e.g., metal) or a non-conductive material (e.g., polymer or fiber reinforced plastics (FRP)). According to an embodiment, the pair of metal plates 461 and 462 may include a first metal plate 461 disposed to correspond to at least a portion of the first and third panel areas 430a and 430c between the support plate 450 and the pair of support members 261 and 262, and a second metal plate 462 disposed to correspond to at least a portion of the second and third panel areas 430b and 430c. According to an embodiment, the pair of metal plates 461 and 462 may be formed of a metal material (e.g., SUS), thereby helping to reinforce a ground connection structure and rigidity for the flexible display 230.

According to various embodiments, the sub-display 300 may be disposed in a space between the second housing 220 and the second rear cover 250. According to an embodiment, the sub-display 300 may be disposed to be visible from the outside through substantially the entire area of the second rear cover 250 in the space between the second housing 220 and the second rear cover 250.

According to various embodiments, at least a portion of the first support member 261 may be foldably combined with the second support member 262 through the hinge plate 320. According to an embodiment, the electronic device 200 may include at least one wiring member 263 (e.g., a flexible printed circuit board (FPCB)) disposed from at least a portion of the first support member 261 to a portion of the second support member 262 across the hinge plate 320. According to an embodiment, the first support member 261 may be disposed in such a way that it extends from the first side member 213 or is structurally combined with the first side member 213. According to an embodiment, the electronic device 200 may have a first space (e.g., the first space 2101 in FIG. 2A) provided through the first support member 261 and the first rear cover 240.

According to various embodiments, the first housing 210 (e.g., a first housing structure) may be configured through a combination of the first side member 213, the first support member 261, and the first rear cover 240. According to an embodiment, the second support member 262 may be disposed in such a way that it extends from the second side member 223 or is structurally combined with the second side member 223. According to an embodiment, the electronic device 200 may have a second space (e.g., the second space 2201 in FIG. 2A) provided through the second support member 262 and the second rear cover 250.

According to various embodiments, the second housing 220 (e.g., a second housing structure) may be configured through a combination of the second side member 223, the second support member 262, and the second rear cover 250. According to an embodiment, at least a portion of the at least one wiring member 263 and/or the hinge plate 320 may be disposed to be supported through at least a portion of the pair of support members 261 and 262. According to an embodiment, the at least one wiring member 263 may be disposed in a direction (e.g., the x-axis direction) that crosses the first and second support members 261 and 262. According to an embodiment, the at least one wiring member 263 may be disposed in a direction (e.g., the x-axis direction) substantially perpendicular to the folding axis (e.g., the y-axis or the folding axis A in FIG. 2A).

According to various embodiments, the at least one substrate 270 may include a first substrate 271 disposed in the first space 2101 and a second substrate 272 disposed in the second space 2201. According to an embodiment, the first substrate 271 and the second substrate 272 may include at least one electronic component disposed to implement various functions of the electronic device 200. According to an embodiment, the first substrate 271 and the second substrate 272 may be electrically connected to each other through the at least one wiring member 263.

According to various embodiments, the electronic device 200 may include at least one battery 291 and 292. According to an embodiment, the at least one battery 291 and 292 may include a first battery 291 disposed in the first space 2101 of the first housing 210 and electrically connected to the first substrate 271, and a second battery 292 disposed in the second space 2201 of the second housing 220 and electrically connected to the second substrate 272. According to an embodiment, the first and second support members 261 and 262 may further have at least one swelling hole for the first and second batteries 291 and 292.

According to various embodiments, the first housing 210 may have a first rotation support surface 214, and the second housing 220 may have a second rotation support surface 224 corresponding to the first rotation support surface 214. According to an embodiment, the first and second rotation support surfaces 214 and 224 may have curved surfaces corresponding to the curved outer surface of the hinge cover 310. According to an embodiment, when the electronic device 200 is in the unfolding state, the first and second rotational support surfaces 214 and 224 may cover the hinge cover 310 so as not to expose or so as to partially expose the hinge cover 310 to the rear surface of the electronic device 200. According to an embodiment, when the electronic device 200 is in the folding state, the first and second rotational support surfaces 214 and 224 may rotate along the curved outer surface of the hinge cover 310 and thereby expose at least in part the hinge cover 310 to the rear surface of the electronic device 200.

According to various embodiments, the electronic device 200 may include at least one antenna 276 disposed in the first space 2201. According to an embodiment, the at least one antenna 276 may be disposed between the first battery 291 and the first rear cover 240 in the first space 2201. According to an embodiment, the at least one antenna 276 may include, for example, a near field communication (NFC) antenna, a wireless charging antenna, and/or a magnetic secure transmission (MST) antenna. According to an embodiment, the at least one antenna 276 may perform short-range communication with an external device or wirelessly transmit/receive power required for charging, for example. In some embodiments, the antenna structure may be formed by at least a portion of the first side member 213 or the second side member 223, a portion of the first and second support members 261 and 262, or a combination thereof.

According to various embodiments, the electronic device 200 may further include at least one electronic component assembly 274 and 275) and/or additional support members 273 and 277 disposed in the first space 2101 and/or the second space 2201. For example, the at least one electronic component assembly 274 and 275 may include an interface connector port assembly 274 or a speaker assembly 275.

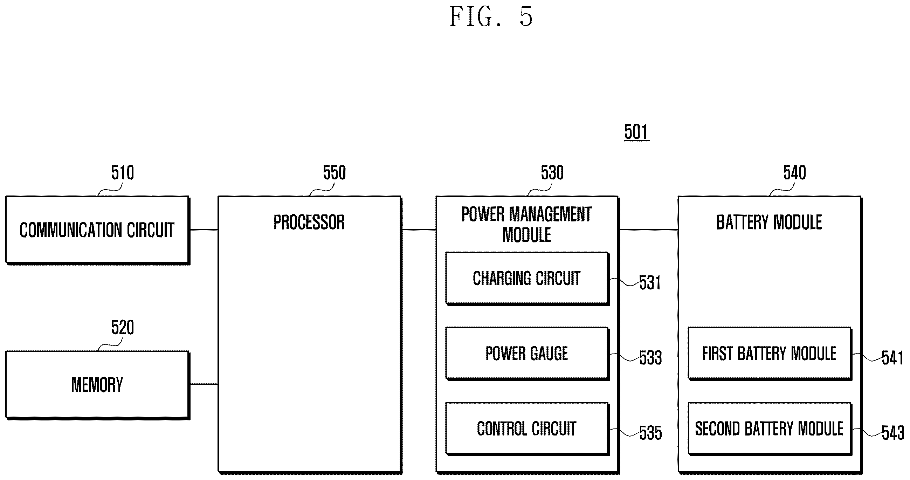

FIG. 5 is a block diagram illustrating a foldable electronic device 501 according to one embodiment of the present disclosure.

With reference to FIG. 5, the foldable electronic device 501 (e.g., the electronic device 101 in FIG. 1, the electronic device 200 in FIGS. 2A to 4) may include a communication circuit 510 (e.g., the communication module 190 in FIG. 1), a memory 520 (e.g., the memory 130 in FIG. 1), a power management module 530 (e.g., the power management module 188 in FIG. 1), a battery module 540 (e.g., the battery 189 in FIG. 1), and/or a processor 550 (e.g., the processor 120 in FIG. 1).

According to one embodiment of the present disclosure, the communication circuit 510 (e.g., the communication module 190 in FIG. 1) may establish a communication channel with an external electronic device, and may support transmitting and receiving various data with the external electronic device.

According to one embodiment of the present disclosure, the memory 520 (e.g., the memory 130 in FIG. 1) may perform a function of storing a program (e.g., the program 140 in FIG. 1), an operating system (OS) (e.g., the operating system 142 in FIG. 1), various applications, and/or input/output data for processing and controlling the processor 550 of the foldable electronic device 501, and may store a program that controls an overall operation of the foldable electronic device 501. The memory 520 may store various instructions that may be executed by the processor 550.

In one embodiment, the memory 520 may store state information related to the battery module 540 (e.g., a first battery module 541 and/or a second battery module 543). For example, the memory 520 may store first state information related to the first battery module 541, second state information related to the second battery module 543, and/or third state information related to a state in which the first battery module 541 and the second battery module 543 are connected. For example, the state information related to the battery module 540 (e.g., the first battery module 541 and/or the second battery module 543) (e.g., the first state information, the second state information, and the third state information) may include a capacity, a charge/discharge cycle count, a voltage, and/or a temperature of the battery module (e.g., the first battery module 541 and/or the second battery module 543). However, the present disclosure is not limited thereto.

According to one embodiment of the present disclosure, the power management module 530 (e.g., the power management module 188 in FIG. 1) may include a charging circuit 531, a power gauge 533, and/or a control circuit 535.

In one embodiment, the charging circuit 531 may charge the battery module 540 (e.g., the first battery module 541 and/or the second battery module 543) by using power supplied from external power to the foldable electronic device 501. In one embodiment, the charging circuit 531 may select a charging method (e.g., normal charging or fast charging) based on at least some of a type of the external power (e.g., a power adapter, USB, or wireless charging), a magnitude of power that is available to be supplied from the external power (e.g., about 20 watts or more), or attributes of the battery module 540, and may charge the battery module 540 by using the selected charging method. The external power may be wiredly connected to the foldable electronic device 501 through, for example, a connection terminal (e.g., the connection terminal 178 in FIG. 1), or may be connected wirelessly through an antenna module (e.g., the antenna module 197 in FIG. 1).

In one embodiment, the power gauge 533 may measure state information (e.g., a capacity, a charge/discharge cycle count, a voltage, and/or a temperature of the battery module 540 (e.g., the first battery module 541 and/or the second battery module 543)) with respect to the battery module 540 (e.g., the first battery module 541 and/or the second battery module 543).

In one embodiment, the control circuit 535 may determine whether there is an abnormality of the battery module 540 based at least partially on the state information of the battery module 540 measured by using the charging circuit 531 and/or the power gauge 533. For example, the control circuit 535 may identify the battery module 540, for example, first voltage of the first battery module 541 and/or a second voltage of the second battery module 543. The control circuit 535 may determine whether there is an abnormality of the first battery module 541 and/or the second battery module 543 based on whether the first voltage and/or the second voltage is lowered than a specific voltage. The control circuit 535, in case where the first voltage of the first battery module 541 and/or the second voltage of the second battery module 543 is lowered than the specific voltage, when it is identified that a difference between the first voltage and the second voltage exceeds a designated voltage, may cut off power of the first battery module 541 or the second battery module 543.

According to one embodiment of the present disclosure, the battery module 540 (e.g., the battery 189 in FIG. 1) may include the first battery module 541 (e.g., the first battery 291 in FIG. 4) and the second battery module 543 (e.g., the second battery 292 in FIG. 4). The battery module 540 (e.g., the first battery module 541 and/or the second battery module 543) may include, for example, a lithium-ion battery, a rechargeable battery, and/or a solar battery.

In one embodiment, the first battery module 541 may be disposed in a first space (e.g., the first space 2101 in FIG. 2A) of a first housing (e.g., the first housing 210 in FIGS. 2A to 4). The second battery module 543 may be disposed in a second space (e.g., the second space 2201 in FIG. 2A) of a second housing (e.g., the second housing 220 in FIGS. 2A to 4).

In one embodiment, the first battery module 541 and the second battery module 543 may be identical in type and/or capacity (or maximum capacity).

In one embodiment, each of the first battery module 541 and the second battery module 543 may include at least two battery cells. However, the present disclosure is not limited thereto, and each of the first battery module 541 and the second battery module 543 may include a number of battery cells exceeding at least two.

According to one embodiment of the present disclosure, the processor 550 (e.g., the processor 120 in FIG. 1) may include, for example, a micro controller unit (MCU), and by driving an operating system (OS) or an embedded software program, may control a plurality of hardware components connected to the processor 550. The processor 550 may control a plurality of hardware components, for example, according to instructions stored in the memory 520 (e.g., the program 140 in FIG. 1).

In one embodiment, the processor 550 may receive information related to a cut-off of power of the first battery module 541 or the second battery module 543 from the control circuit 535. The processor 550 may provide a notification related to a cut-off of power of the first battery module 541 or the second battery module 543 based on information related to the cut-off of power of the first battery module 541 or the second battery module 543 received from the control circuit 535.

The foldable electronic device 501 according to one embodiment of the present disclosure may include the first housing 210, the hinge module 320, and the second housing 220 mutually rotatably connected to the first housing 210 through the hinge module 320. The foldable electronic device 501 according to one embodiment may include a main substrate 615 disposed in an internal space 2101 of the first housing 210. The foldable electronic device 501 according to one embodiment may include the first battery module 541 disposed in the internal space 2101 of the first housing 210, and including a first battery circuit substrate 610. The foldable electronic device 501 according to one embodiment may include the second battery module 543 disposed in an internal space 2201 of the second housing 220, and including a second battery circuit substrate 660. The foldable electronic device 501 according to one embodiment may include a first FPCB 680 electrically connecting the main substrate 615 and the first battery circuit substrate 610. The foldable electronic device 501 according to one embodiment may include a second FPCB 685 electrically connecting the first battery circuit substrate 610 and the second battery circuit substrate 660. The foldable electronic device 501 according to one embodiment may include a first switching circuit 720 for controlling an electrical connection between the first battery module 541 and the main substrate 615. The foldable electronic device 501 according to one embodiment may include a second switching circuit 725 for controlling an electrical connection between the second battery module 543 and the main substrate 615. The foldable electronic device 501 according to one embodiment may include the control circuit 535 disposed on the first battery circuit substrate 610. The control circuit 535 according to one embodiment may cut off power of the first battery module 541 or the second battery module 543 by controlling the first switching circuit 720 or the second switching circuit 725 based on a difference between the first voltage of the first battery module 541 and the second voltage of the second battery module 543.

The control circuit 535 according to one embodiment may cut off power of the first battery module 541 by controlling the first switching circuit 720 based on the difference between the first voltage of the first battery module 541 and the second voltage of the second battery module 543 exceeding a designated voltage, and the first voltage of the first battery module 541 being less than the second voltage of the second battery module 543.

The control circuit 535 according to one embodiment may identify whether a difference between the first voltage of the first battery module 541 and the second voltage of the second battery module 543 exceeds a designated voltage. The control circuit 535 according to one embodiment may identify whether the first voltage of the first battery module 541 is less than the second voltage of the second battery module 543, in case where the difference between the first voltage of the first battery module 541 and the second voltage of the second battery module 543 exceeds a designated voltage.

The control circuit 535 according to one embodiment may cut off power of the second battery module 543 by controlling the second switching circuit 725 based on the first voltage of the first battery module 541 not being less than the second voltage of the second battery module 543.

The foldable electronic device 501 according to one embodiment may further include the processor 550 disposed on the main substrate 615.

The control circuit 535 according to one embodiment may deliver information related to a cut-off of power of the first battery module 541 or the second battery module 543 to the processor 550.

The processor 550 according to one embodiment may provide a notification related to a cut-off of power of the first battery module 541 or the second battery module 543 based on information related to the cut-off of power of the first battery module 541 or the second battery module 543 received from the control circuit 535.

The foldable electronic device 501 according to one embodiment may further include the memory 520 disposed on the main substrate 615, storing instructions. The foldable electronic device 501 according to one embodiment may further include the processor 550.

The memory 520 according to one embodiment may store first state information related to the first battery module 541, second state information related to the second battery module 543, and/or third state information related to a state in which the first battery module 541 and the second battery module 543 are connected.

The instructions stored in the memory 520 according to one embodiment, when executed by the processor 550, may cause the foldable electronic device 501, when it is identified that power of the first battery module 541 or the second battery module 543 is cut off, to supply power to the main substrate 615 by using the second state information or the first state information instead of the third state information.

The first battery module 541 according to one embodiment may include at least two battery cells 5411 and 5412.

The second battery module 543 according to one embodiment may include at least two battery cells 5431 and 5432.

According to one embodiment, each of at least two battery cells 5411 and 5412 included in the first battery module 541 and each of at least two battery cells 5431 and 5432 included in the second battery module 543 may be identical in type and capacity.

The foldable electronic device 501 according to one embodiment of the present disclosure may include the first housing 210, the hinge module 320, and the second housing 220 mutually rotatably connected to the first housing 210 through the hinge module 320. The foldable electronic device 501 according to one embodiment may include a main substrate 615 disposed in an internal space 2101 of the first housing 210. The foldable electronic device 501 according to one embodiment may include the first battery module 541 disposed in the internal space 2101 of the first housing 210, and including a first battery circuit substrate 610. The foldable electronic device 501 according to one embodiment may include the second battery module 543 disposed in an internal space 2201 of the second housing 220, and including a second battery circuit substrate 660. The foldable electronic device 501 according to one embodiment may include a first FPCB 680 electrically connecting the main substrate 615 and the first battery circuit substrate 610. The foldable electronic device 501 according to one embodiment may include a second FPCB 685 electrically connecting the first battery circuit substrate 610 and the second battery circuit substrate 660. The foldable electronic device 501 according to one embodiment may include a switching circuit 1310 for controlling an electrical connection between the second battery module 543 and the main substrate 615. The foldable electronic device 501 according to one embodiment may include the control circuit 535 disposed on the first battery circuit substrate 610. The control circuit 535 according to one embodiment may cut off power of the second battery module 543 by controlling the switching circuit 1310 based on a difference between the first voltage of the first battery module 541 and the second voltage of the second battery module 543.

The foldable electronic device 501 according to one embodiment may further include a second switching circuit for controlling an electrical connection between the first battery module 541 and the main substrate 615.

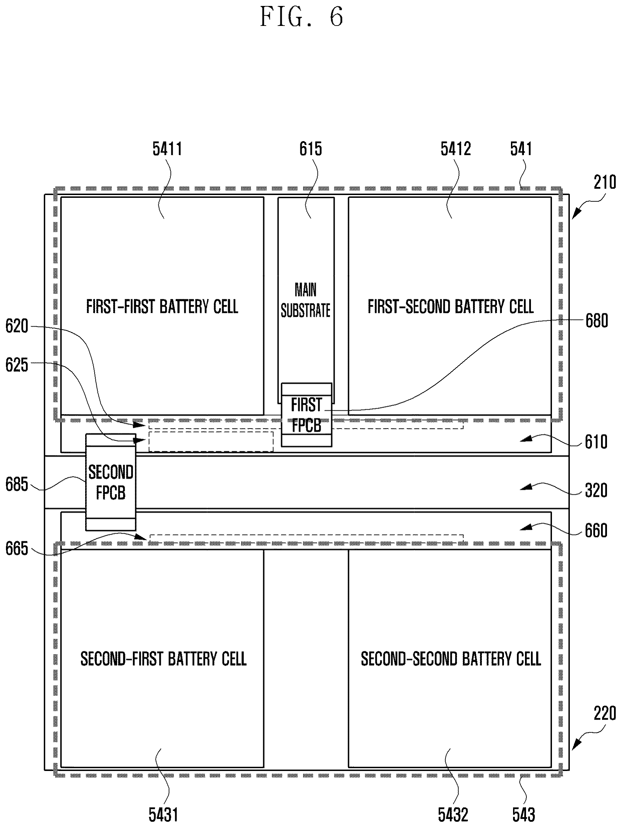

FIG. 6 is a block diagram schematically illustrating the foldable electronic device 501 including the plurality of battery modules 541 and 543 according to one embodiment of the present disclosure.

With reference to FIG. 6, the foldable electronic device (e.g., the foldable electronic device 501 in FIG. 5) may include a pair of housings (e.g., a first housing (e.g., the first housing 210 in FIGS. 2A to 4) and a second housing (e.g., the second housing 220 in FIGS. 2A to 4)) (e.g., a foldable housing structure), which are rotatably coupled with respect to a specific axis (e.g., the specific axis A in FIGS. 2A and 2B) through a hinge device (e.g., the hinge plate 320 in FIG. 4) so as to be foldable with respect to each other.

In one embodiment, the first battery module 541 may be disposed in the first space (e.g., the first space 2101 in FIG. 2A) of the first housing 210, and the second battery module 543 may be disposed in the second space (e.g., the second space 2201 in FIG. 2A) of the second housing 220.

In one embodiment, the main substrate 615 may be disposed in the first space 2101 of the first housing 210. In one embodiment, components of FIG. 5 described above, for example, the communication circuit 510, the memory 520, the power management module 530, and/or the processor 550, may be disposed (or mounted) on the main substrate 615.

In one embodiment, the first battery module 541 may be configured of at least two battery cells. For example, the first battery module 541 may include a first-first battery cell 5411 and a first-second battery cell 5412.

In one embodiment, the first battery module 541 may include the first battery circuit substrate 610. A first battery protection circuit (protection circuit module (PCM)) 620 may be disposed on the first battery circuit substrate 610. The first battery protection circuit 620 may perform one or more of various functions (e.g., a pre-cut off function) for preventing performance degradation or damage of the first battery module 541. The first battery protection circuit 620 may, additionally or alternatively, be configured as at least a part of a battery management system (BMS) capable of performing various functions including balancing of the first battery cells (e.g., the first-first battery cell 5411 and the first-second battery cell 5412), capacity measurement of the first battery module 541, charge/discharge cycle count measurement, temperature measurement, or voltage measurement.

In one embodiment, components 625 for controlling a power cut-off of the first battery module 541 and/or the second battery module 543 based on a difference between the first voltage of the first battery module 541 and the second voltage of the second battery module 543 may be disposed on the first battery circuit substrate 610.

In one embodiment, the second battery module 543 may be configured of at least two battery cells. For example, the second battery module 543 may include a second-first battery cell 5431 and a second-second battery cell 5432.

In one embodiment, the second battery module 543 may include a second battery circuit substrate 660. A second battery protection circuit (protection circuit module (PCM)) 665 may be disposed on the second battery circuit substrate 660. The second battery protection circuit 665 may perform one or more of various functions (e.g., a pre-cut off function) for preventing performance degradation or damage of the second battery module 543. The second battery protection circuit 665 may, additionally or alternatively, be configured as at least a part of a battery management system (BMS) capable of performing various functions including balancing of the second battery cells (e.g., the second-first battery cell 5431 and the second-second battery cell 5432), capacity measurement of the second battery module 543, charge/discharge cycle count measurement, temperature measurement, or voltage measurement.

In one embodiment, the first battery module 541 and the second battery module 543 may be identical or similar in type and/or capacity (or maximum capacity). For example, the first-first battery cell 5411, the first-second battery cell 5412, the second-first battery cell 5431, and the second-second battery cell 5432 may be identical or similar in type and/or capacity (or maximum capacity).

However, the present disclosure is not limited thereto, and in one embodiment, a charging speed of the first battery module 541 and a charging speed of the second battery module 543 may be identical or similar. In addition, in one embodiment, a discharging speed of the first battery module 541 and a discharging speed of the second battery module 543 may be identical or similar.

In one embodiment, the foldable electronic device 501 may include the first FPCB 680 for electrically connecting the main substrate 615 and the first battery circuit substrate 610.

In one embodiment, the foldable electronic device 501 may include the second FPCB 685 for electrically connecting the first battery circuit substrate 610 and the second battery circuit substrate 660.

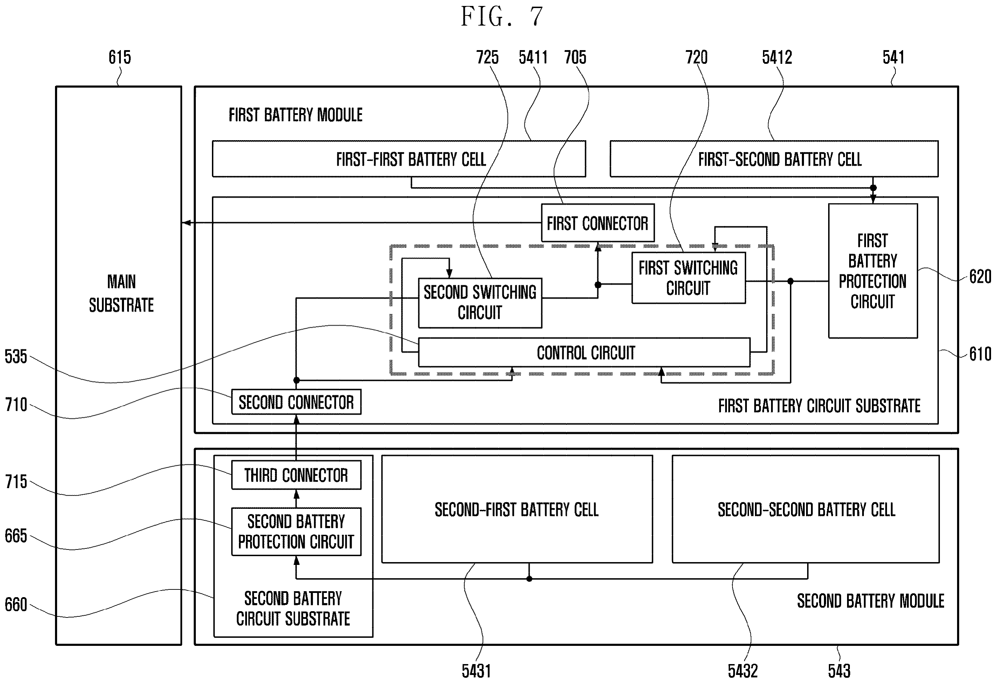

FIG. 7 is a block diagram schematically illustrating the foldable electronic device 501 including the plurality of battery modules 541 and 543 according to one embodiment of the present disclosure.

The foldable electronic device 501 illustrated in FIG. 7 according to various embodiments is identical to the foldable electronic device 501 illustrated in FIG. 6 described above, and thus, description thereof may be replaced with the description related to FIG. 6. In the following description of FIG. 7, only configurations different from FIG. 6 will be described.

With reference to FIG. 7, the foldable electronic device (e.g., the foldable electronic device 501 in FIG. 5) may include the first battery module 541 and/or the main substrate 615 disposed in the first space (e.g., the first space 2101 in FIG. 2A) of the first housing (e.g., the first housing 210 in FIGS. 2A to 4). The foldable electronic device 501 may include the second battery module 543 disposed in the second space (e.g., the second space 2201 in FIG. 2A) of the second housing (e.g., the second housing 220 in FIGS. 2A to 4).

In one embodiment, components of FIG. 5 described above, for example, the communication circuit 510, the memory 520, the power management module 530, and/or the processor 550, may be disposed (or mounted) on the main substrate 615.

In one embodiment, the first battery module 541 may be configured of at least two battery cells. For example, the first battery module 541 may include a first-first battery cell 5411 and a first-second battery cell 5412. However, the present disclosure is not limited thereto, and the first battery module 541 may be configured of a number of battery cells exceeding at least two.

In one embodiment, the first battery module 541 may include the first battery circuit substrate 610. The first battery circuit substrate 610 may have disposed thereon the first battery protection circuit 620, a first connector 705, a second connector 710, the first switching circuit 720, the second switching circuit 725, and/or the control circuit 535.

In one embodiment, the foldable electronic device 501 may include the first FPCB 680 for electrically connecting the main substrate 615 and the first battery circuit substrate 610. For example, the first FPCB 680 may enable the first battery circuit substrate 610 to be electrically connected to the main substrate 615 through the first connector 705 disposed on the first battery circuit substrate 610.

In one embodiment, the second battery module 543 may include a second battery circuit substrate 660. The second battery circuit substrate 660 may have disposed thereon the second battery protection circuit 665.

In one embodiment, the foldable electronic device 501 may include the second FPCB 685 for electrically connecting the first battery circuit substrate 610 and the second battery circuit substrate 660. For example, the second FPCB 685 may enable the first battery circuit substrate 610 to be electrically connected to the second battery circuit substrate 660 through the second connector 710 disposed on the first battery circuit substrate 610 and a third connector 715 disposed on the second battery circuit substrate 660.

In one embodiment, the first switching circuit 720 may be used for cutting off power of the first battery module 541. The second switching circuit 725 may be used for cutting off power of the second battery module 543. For example, the control circuit 535 may control a state (e.g., an off state (e.g., an open state) or an on state (e.g., a short state)) of the first switching circuit 720 and/or the second switching circuit 725 so as to cut off power of the first battery module 541 and/or the second battery module 543 having lower voltage, based on a difference between the first voltage of the first battery module 541 and the second voltage of the second battery module 543 exceeding a designated voltage.

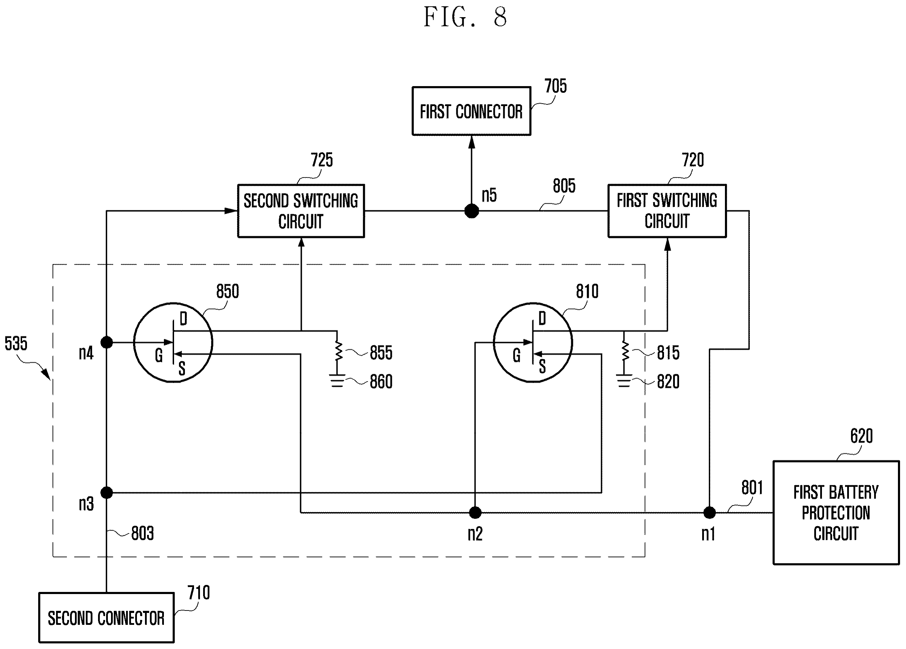

FIG. 8 is a circuit diagram embodying the control circuit 535 according to one embodiment of the present disclosure.

With reference to FIG. 8, the control circuit 535 may include a first transistor 810 and a second transistor 850. The first transistor 810 and the second transistor 850 may be field effect transistors (FETs) having a source terminal S, a drain terminal D, and a gate terminal G. However, the present disclosure is not limited thereto.

In one embodiment, the first voltage of the first battery module 541 may be delivered to the first switching circuit 720 through the first protection circuit 620 and a first electrical path 801. For example, the first voltage of the first battery module 541 may branch at a first node n1 of the first electrical path 801 and may be delivered to the first switching circuit 720.

In one embodiment, the first voltage of the first battery module 541 may be delivered to the gate terminal G of the first transistor 810 and the source terminal S of the second transistor 850 through the first protection circuit 620 and the first electrical path 801. For example, the first voltage of the first battery module 541 may branch at a second node n2 of the first electrical path 801 and may be delivered to the gate terminal G of the first transistor 810 and the source terminal S of the second transistor 850.

In one embodiment, the second voltage of the second battery module 543 may be delivered to the second switching circuit 725 through the second connector 710 and a second electrical path 803.

In one embodiment, the second voltage of the second battery module 543 may be delivered to the source terminal S of the first transistor 810 and the gate terminal G of the second transistor 850 through the second connector 710 and the second electrical path 803. For example, the second voltage of the second battery module 543 may branch at a third node n3 of the second electrical path 803 and may be delivered to the source terminal S of the first transistor 810. The second voltage of the second battery module 543 may branch at a fourth node n4 of the second electrical path 803 and may be delivered to the gate terminal G of the second transistor 850.

In one embodiment, in case where the first switching circuit 720 and/or the second switching circuit 725 is in an on state (e.g., a short state), the first voltage of the first battery module 541 and/or the second voltage of the second battery module 543 may be delivered to the first connector 705 through a fifth node n5 of a third electrical path 805. As the first voltage of the first battery module 541 and/or the second voltage of the second battery module 543 is delivered to the first connector 705, power may be supplied to components disposed on the main substrate 615 through the first FPCB (the first FPCB 680 in FIG. 6) electrically connected to the first connector 705.

In one embodiment, the first transistor 810 of the control circuit 535 may be used for controlling a state of the first switching circuit 720, for example, an off state (e.g., an open state) or an on state (e.g., a short state), based on the first voltage of the first battery module 541 and the second voltage of the second battery module 543.

For example, in case where an abnormality (e.g., overcurrent, overcharge, over discharge, overheating, short, and/or swelling) occurs in the first battery module 541, the first voltage of the first battery module 541 may be lowered. As the first voltage of the first battery module 541 is lowered, the first voltage delivered to the gate terminal G of the first transistor 810 may be lower than the second voltage of the second battery module 543 delivered to the source terminal S of the first transistor 810. Accordingly, a difference (Vgs) (e.g., a negative (-) voltage difference) may occur between the first voltage (Vg) delivered to the gate terminal G of the first transistor 810 and the second voltage (Vs) delivered to the source terminal S. In case where the difference between the first voltage and the second voltage exceeds a designated voltage, the first transistor 810 may operate so that the second voltage is applied to a first resistor 815 (e.g., a pull-down resistor), and the first switching circuit 720 may be switched to the off state (e.g., the open state). As the first switching circuit 720 is switched to the off state, power of the first battery module 541 may be cut off.

In one embodiment, as the first voltage of the first battery module 541 is lowered, the second voltage of the second battery module 543 delivered to the gate terminal G of the second transistor 850 may be higher than the first voltage of the first battery module 541 delivered to the source terminal S. Accordingly, a difference (Vgs) (e.g., a positive (+) voltage difference) may occur between the second voltage (Vg) delivered to the gate terminal G of the second transistor 850 and the first voltage (Vs) delivered to the source terminal S. As a positive (+) voltage difference occurs between the gate terminal G and the source terminal S of the second transistor 850, the second transistor 850 may not operate, and the second voltage may be delivered to a second ground 860 through a second resistor 855. Accordingly, the second switching circuit 725 may maintain an on state (e.g., a short state).

For another example, in case where an abnormality (e.g., overcurrent, overcharge, over discharge, overheating, short, and/or swelling) occurs in the second battery module 543, the second voltage of the second battery module 543 may be lowered. As the second voltage of the second battery module 543 is lowered, the second voltage delivered to the source terminal S of the first transistor 810 may be lower than the first voltage of the first battery module 541 delivered to the gate terminal G of the first transistor 810. Accordingly, a difference (Vgs) (e.g., a positive (+) voltage difference) may occur between the second voltage (Vg) delivered to the gate terminal G of the first transistor 810 and the first voltage (Vs) delivered to the source terminal S. As a positive (+) voltage difference occurs between the gate terminal G and the source terminal S of the first transistor 810, the first transistor 810 may not operate, and the first voltage may be delivered to a first ground 820 through the first resistor 815. Accordingly, the first switching circuit 720 may maintain an on state (e.g., a short state).

In one embodiment, as the second voltage of the second battery module 543 is lowered, the second voltage of the second battery module 543 delivered to the gate terminal G of the second transistor 850 may be lower than the first voltage of the first battery module 541 delivered to the source terminal S. Accordingly, a difference (Vgs) (e.g., a negative (-) voltage difference) may occur between the second voltage (Vg) delivered to the gate terminal G of the second transistor 850 and the first voltage (Vs) delivered to the source terminal S. When a negative (-) voltage difference occurs between the gate terminal G and the source terminal S of the second transistor 850, and a difference between the second voltage and the first voltage is identified to exceed a designated voltage, the second transistor 850 may operate so that the first voltage is applied to the second resistor 855 (e.g., a pull-down resistor), and the second switching circuit 725 may be switched to the off state (e.g., an open state). As the second switching circuit 725 is switched to the off state, power of the second battery module 543 may be cut off.

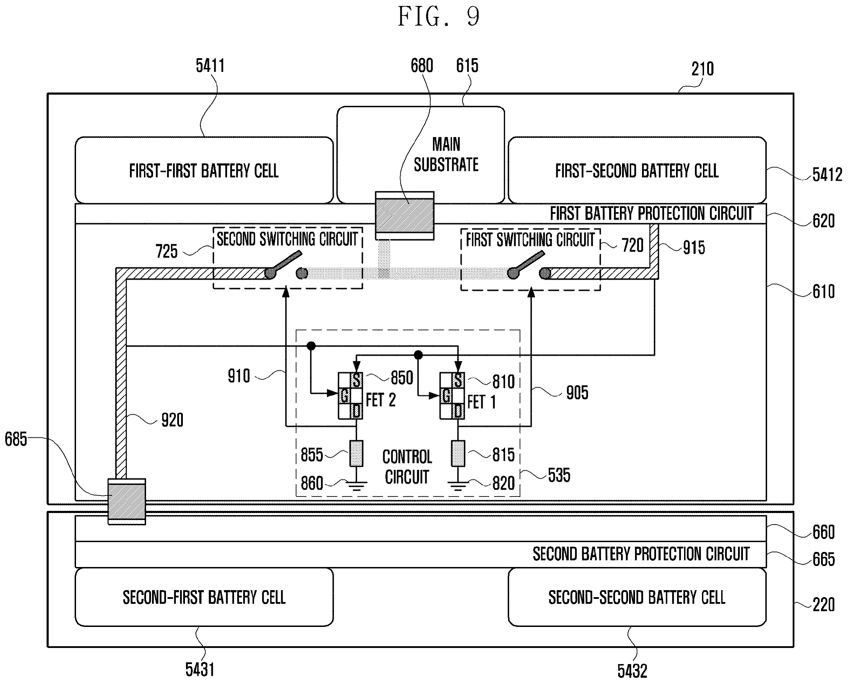

FIG. 9 is a diagram illustrating an operation method of the foldable electronic device 501 including the plurality of battery modules 541 and 543 according to one embodiment of the present disclosure.

With reference to FIG. 9, a foldable electronic device (e.g., the foldable electronic device 501 in FIG. 5) may include a pair of housings (e.g., a first housing (e.g., the first housing 210 in FIGS. 2A to 4) and a second housing (e.g., the second housing 220 in FIGS. 2A to 4)).

In one embodiment, the first space of the first housing 210 (e.g., the first space 2101 in FIG. 2A) may have disposed therein the first battery module 541. The first battery module 541 may include at least two battery cells (e.g., the first-first battery cell 5411 and the first-second battery cell 5412).

In one embodiment, the first battery module 541 may include the first battery circuit substrate 610. The first battery protection circuit 620, which performs one or more of various functions (e.g., a pre-cut off function) for preventing performance degradation or damage of the first battery module 541, may be disposed in the first battery circuit substrate 610.

In one embodiment, the second space of the second housing 220 (e.g., the second space 2201 of FIG. 2A) may have disposed therein the second battery module 543. The second battery module 543 may include at least two battery cells (e.g., the second-first battery cell 5431 and the second-second battery cell 5432).

In one embodiment, the second battery module 543 may include a second battery circuit substrate 660. The second battery protection circuit 665, which performs one or more of various functions (e.g., a pre-cut off function) for preventing performance degradation or damage of the second battery module 543, may be disposed in the second battery circuit substrate 660.

In one embodiment, the main substrate 615 may be disposed in the first space 2101 of the first housing 210. The foldable electronic device 501 may include the first FPCB 680 for electrically connecting the main substrate 615 and the first battery circuit substrate 610. The foldable electronic device 501 may include a second FPCB 685 for electrically connecting the first battery circuit substrate 610 and the second battery circuit substrate 660.

In one embodiment, the first battery circuit substrate 610 may have disposed therein the first switching circuit 720, the second switching circuit 725, and/or the control circuit 535 for cutting off power of the first battery module 541 and/or the second battery module 543 based on a difference between a first voltage 915 of the first battery module 541 and a second voltage 920 of the second battery module 543.

In one embodiment, the control circuit 535 may include the first transistor 810 and the second transistor 850. The first transistor 810 and the second transistor 850 may be field effect transistors (FETs) having a source terminal S, a drain terminal D, and a gate terminal G. However, the present disclosure is not limited thereto.

In one embodiment, the first voltage 915 of the first battery module 541 may be delivered to the gate terminal G of the first transistor 810 and the source terminal S of the second transistor 850 of the control circuit 535. The second voltage 920 of the second battery module 543 may be delivered to the source terminal S of the first transistor 810 and the gate terminal G of the second transistor 850.

In one embodiment, the control circuit 535 may identify the first voltage 915 of the first battery module 541 and the second voltage 920 of the second battery module 543.

In one embodiment, when the first voltage 915 of the first battery module 541 and the second voltage 920 of the second battery module 543 are identified as being the same, the control circuit 535 may maintain the first switching circuit 720 and the second switching circuit 725 in an on state (e.g., a short state). For example, as the first voltage 915 of the first battery module 541 and the second voltage 920 of the second battery module 543 are the same, a voltage difference between the gate terminal G and the source terminal S of the first transistor 810 and a voltage difference between the gate terminal G and the source terminal S of the second transistor 850 may not exceed a designated voltage. Accordingly, the first switching circuit 720 and the second switching circuit 725 may maintain an on state (e.g., a short state). In addition, as the first voltage 915 of the first battery module 541 and the second voltage 920 of the second battery module 543 are the same, a first signal 905 output from the first transistor 810 and a second signal 910 output from the second transistor 850 may be maintained in a low state.

In one embodiment, when an abnormality (e.g., overcurrent, overcharge, overdischarge, overheating, short, and/or swelling) of the first battery module 541 occurs, the first voltage 915 of the first battery module 541 may be lowered. As the first voltage 915 of the first battery module 541 is lowered, the first voltage 915 delivered to the gate terminal G of the first transistor 810 may be lower than the second voltage 920 of the second battery module 543 delivered to the source terminal S. Accordingly, a voltage difference (Vgs) between the gate terminal G and the source terminal S of the first transistor 810 may be a negative (-) voltage difference. When the difference between the first voltage 915 and the second voltage 920 exceeds a designated voltage, the first transistor 810 may operate such that the second voltage 920 is applied to the first resistor 815 (e.g., a pull-down resistor), and the first switching circuit 720 may be switched to an off state (e.g., an open state). As the first switching circuit 720 is switched to the off state, power of the first battery module 541 may be cut off. In addition, as the first voltage 915 delivered to the gate terminal G of the first transistor 810 is lower than the second voltage 920 of the second battery module 543 delivered to the source terminal S, the first signal 905 output from the first transistor 810 may be switched to a high state.

In one embodiment, as the first voltage 915 of the first battery module 541 is lowered, the second voltage 920 of the second battery module 543 delivered to the gate terminal G of the second transistor 850 may be higher than the first voltage 915 of the first battery module 541 delivered to the source terminal S. Accordingly, a voltage difference (Vgs) between the gate terminal G and the source terminal S of the second transistor 850 may be a positive (+) voltage difference. As a positive (+) voltage difference occurs between the gate terminal G and the source terminal S of the second transistor 850, the second transistor 850 may not operate, and the first voltage 915 may be delivered to the second ground 860 through the second resistor 855. Accordingly, the second switching circuit 725 may maintain an on state (e.g., a short state). In addition, as the second voltage 920 of the second battery module 543 delivered to the gate terminal G of the second transistor 850 is higher than the first voltage 915 of the first battery module 541 delivered to the source terminal S, the second signal 910 output from the second transistor 850 may be maintained in a low state.

In one embodiment, when an abnormality (e.g., overcurrent, overcharge, overdischarge, overheating, short, and/or swelling) of the second battery module 543 occurs, the second voltage 920 of the second battery module 543 may be lowered. As the second voltage 920 of the second battery module 543 is lowered, the second voltage 920 delivered to the gate terminal G of the second transistor 850 may be lower than the first voltage 915 of the first battery module 541 delivered to the source terminal S of the second transistor 850. In case where a difference between the second voltage 920 and the first voltage 915 exceeds a designated voltage, the second transistor 850 may operate such that the first voltage 915 is applied to the second resistor 855 (e.g., a pull-down resistor), and the second switching circuit 725 may be switched to an off state (e.g., an open state). As the second switching circuit 725 is switched to the off state, power of the second battery module 543 may be cut off. In addition, as the second voltage 920 delivered to the gate terminal G of the second transistor 850 is lower than the first voltage 915 of the first battery module 541 delivered to the source terminal S, the second signal 910 output from the second transistor 850 may be switched to a high state.

In one embodiment, as the second voltage 920 of the second battery module 543 is lowered, the first voltage 915 of the first battery module 541 delivered to the gate terminal G of the first transistor 810 may be higher than the second voltage 920 of the second battery module 543 delivered to the source terminal S of the first transistor 810. As the first voltage 915 is higher than the second voltage 920, the first transistor 810 may not operate, and the first voltage 915 may be delivered to the first ground 820 through the first resistor 815. Accordingly, the first switching circuit 720 may maintain an on state (e.g., a short state). In addition, as the first voltage 915 of the first battery module 541 delivered to the source terminal S of the first transistor 810 is higher than the second voltage 920 of the second battery module 543 delivered to the gate terminal G of the first transistor 810, the first signal 905 output from the first transistor 810 may be maintained in a low state.

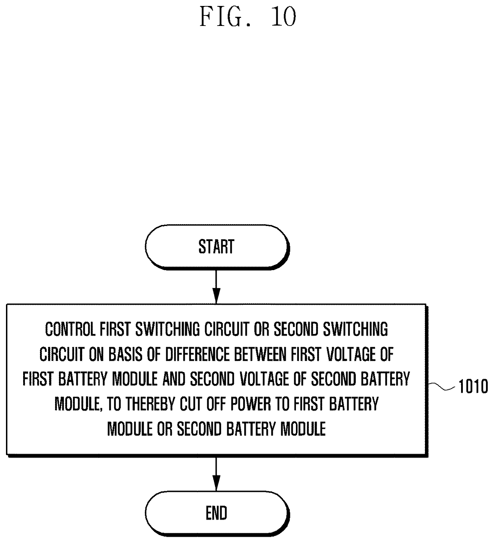

FIG. 10 is a flowchart illustrating an operation method of the foldable electronic device 501 including the plurality of battery modules 541 and 543, according to one embodiment of the present disclosure.

In one embodiment, operation 1010 may be understood to be performed in the control circuit (e.g., the control circuit 535 in FIG. 5) of the foldable electronic device (e.g., the foldable electronic device 501 in FIG. 5). However, the present disclosure is not limited thereto, and operation 1010 may also be performed by the processor (e.g., the processor 550 in FIG. 5) of the foldable electronic device 501.

With reference to FIG. 10, in operation 1010, the control circuit 535 may cut off power of the first battery module 541 or the second battery module 543 by controlling the first switching circuit (e.g., the first switching circuit 720 in FIG. 7) or the second switching circuit (e.g., the second switching circuit 725 in FIG. 7) based on a difference between the first voltage of the first battery module 541 and the second voltage of the second battery module 543.

For example, the control circuit 535 may identify the first voltage of the first battery module 541 and the second voltage of the second battery module 543, and based on a difference between the first voltage of the first battery module 541 and the second voltage of the second battery module 543, may control the first switching circuit 720 or the second switching circuit 725 to cut off power of the first battery module 541 or the second battery module 543.

In one embodiment, an abnormality (e.g., overcurrent, overcharge, overdischarge, overheating, short, and/or swelling) of the first battery module 541 and/or the second battery module 543 may occur, and accordingly, the first voltage of the first battery module 541 and/or the second voltage of the second battery module 543 may be lowered. For example, in case where an abnormality of the first battery module 541 occurs such that the first voltage of the first battery module 541 is lowered, the first voltage of the first battery module 541 may be lower than the second voltage of the second battery module 543. As another example, in case where an abnormality of the second battery module 543 occurs such that the second voltage of the second battery module 543 is lowered, the second voltage of the second battery module 543 may be lower than the first voltage of the first battery module 541.

In one embodiment, based on the first voltage of the first battery module 541 and/or the second voltage of the second battery module 543 being lowered, and the difference between the first voltage of the first battery module 541 and the second voltage of the second battery module 543 exceeding a designated voltage, the control circuit 535 may control the first switching circuit (e.g., the first switching circuit 720 in FIG. 7) or the second switching circuit (e.g., the second switching circuit 725 in FIG. 7) to cut off power of the first battery module 541 or the second battery module 543.

In one embodiment, the designated voltage may be about 0.5 V to about 0.6 V. However, the present disclosure is not limited thereto.

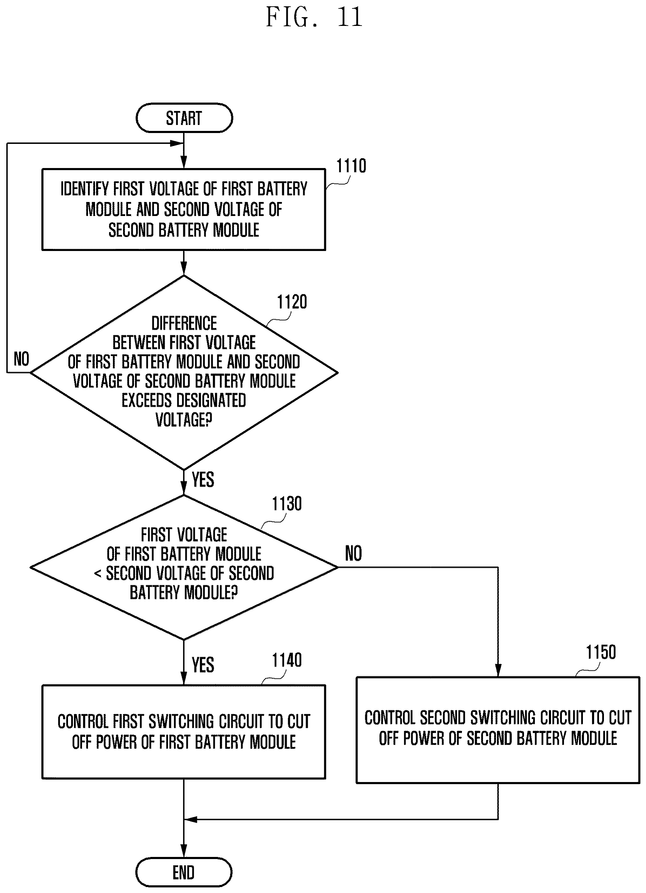

The foregoing operations according to various embodiments will be described in more detail with reference to FIG. 11 described below.

FIG. 11 is a flowchart embodying the above-mentioned operations illustrated in FIG. 10, according to one embodiment of the present disclosure.

In the following embodiment, each operation may be sequentially performed, but is not necessarily performed sequentially. For example, an order of the respective operations may be changed, and at least two operations may be performed in parallel.

In one embodiment, operations 1110 to 1150 may be understood to be performed by the control circuit (e.g., the control circuit 535 in FIG. 5) of the foldable electronic device (e.g., the foldable electronic device 501 in FIG. 5). However, the present disclosure is not limited thereto, and operations 1110 to 1150 may also be performed by the processor (e.g., the processor 550 in FIG. 5) of the foldable electronic device 501.

With reference to FIG. 11, in operation 1110, the control circuit 535 may identify the first voltage of the first battery module (e.g., the first battery module 541 in FIG. 5) and the second voltage of the second battery module (e.g., the second battery module 543 in FIG. 5). For example, an abnormality (e.g., overcurrent, overcharge, over discharge, overheating, short, and/or swelling) of the first battery module 541 and/or the second battery module 543 may occur, and accordingly, the first voltage of the first battery module 541 and/or the second voltage of the second battery module 543 may be lowered.

In one embodiment, in operation 1120, the control circuit 535 may identify whether a difference between the first voltage of the first battery module 541 and the second voltage of the second battery module 543 exceeds a designated voltage.

In one embodiment, in case where the difference between the first voltage of the first battery module 541 and the second voltage of the second battery module 543 exceeds the designated voltage (e.g., YES in operation 1120), in operation 1130, the control circuit 535 may identify whether the first voltage of the first battery module 541 is less than the second voltage of the second battery module 543. In case where the first voltage of the first battery module 541 is less than the second voltage of the second battery module 543 (e.g., YES in operation 1130), in operation 1140, the control circuit 535 may control the first switching circuit (e.g., the first switching circuit 720 in FIG. 7) to cut off power of the first battery module 541. In this case, the control circuit 535 may maintain the second switching circuit 725 in an on state (e.g., a short state).

In one embodiment, the first switching circuit 720 may control (e.g., cut off or control a connection) an electrical connection between the first battery module 541 and the main substrate (e.g., the main substrate 615 in FIG. 6). For example, the control circuit 535 may control the first switching circuit 720 (e.g., control to an off state (e.g., an open state)) to cut off an electrical connection between the first battery module 541 and the main substrate (e.g., the main substrate 615 in FIG. 6), thereby cutting off delivery of power output from the first battery module 541 to the main substrate 615. In addition, by maintaining the second switching circuit 725 in an on state (e.g., a short state), the control circuit 535 may maintain an electrical connection between the second battery module 543 and the main substrate 615. Accordingly, power output from the second battery module 543 may be delivered to the main substrate 615, and the power may be supplied to components disposed on the main substrate 615.

In one embodiment, in case where the first voltage of the first battery module 541 is not less than the second voltage of the second battery module 543 (e.g., NO in operation 1130), in operation 1150, the control circuit 535 may control the second switching circuit (e.g., the second switching circuit 725 in FIG. 7) to cut off power of the second battery module 543. For example, in case where the first voltage of the first battery module 541 is not less than the second voltage of the second battery module 543, the control circuit 535 may identify that the second voltage of the second battery module 543 is less than the first voltage of the first battery module 541, and may control the second switching circuit 725 to cut off power of the second battery module 543. In this case, the control circuit 535 may maintain the first switching circuit 720 in an on state (e.g., a short state).

In one embodiment, the second switching circuit 725 may control (e.g., cut off or control a connection) an electrical connection between the second battery module 543 and the main substrate 615. For example, the control circuit 535 may control the second switching circuit 725 (e.g., control to an off state (e.g., an open state)) to cut off the electrical connection between the second battery module 543 and the main substrate 615, thereby cutting off delivery of power output from the second battery module 543 to the main substrate 615. In addition, by maintaining the first switching circuit 720 in an on state (e.g., a short state), the control circuit 535 may maintain an electrical connection between the first battery module 541 and the main substrate 615. Accordingly, power output from the first battery module 541 may be delivered to the main substrate 615, and the power may be supplied to components disposed on the main substrate 615.

In one embodiment, in case where a difference between the first voltage of the first battery module 541 and the second voltage of the second battery module 543 does not exceed a designated voltage (e.g., NO in operation 1120), the control circuit 535 may repeatedly perform operation 1110 of identifying the first voltage of the first battery module 541 and the second voltage of the second battery module 543, and operation 1120 of identifying whether the difference between the first voltage and the second voltage exceeds the designated voltage.

In one embodiment, although not illustrated, the control circuit 535 may deliver information related to a cut-off of power of the battery module 540, for example, the first battery module 541 or the second battery module 543, to the processor 550. The processor 550 may provide a notification related to a cut-off of power of the first battery module 541 or the second battery module 543 based on information related to the cut-off of power of the first battery module 541 or the second battery module 543 received from the control circuit 535. The notification related to the cut-off of power of the first battery module 541 or the second battery module 543 may include a notification indicating that an abnormality has occurred in the battery module 540 (e.g., the first battery module 541 or the second battery module 543) in order to induce a user to receive an appropriate action at a service center. The processor 550 may output a notification indicating that an abnormality has occurred in the battery module 540 (e.g., the first battery module 541 or the second battery module 543) through a pop-up window on a display (e.g., the display module 160 in FIG. 1). However, the present disclosure is not limited thereto, and the processor 550 may output a notification indicating that an abnormality has occurred in the battery module 540 (e.g., the first battery module 541 or the second battery module 543) as sound through a speaker (e.g., the acoustic output module 155 in FIG. 1), and/or as vibration through a haptic module (e.g., the haptic module 179 in FIG. 1). Accordingly, a user of the foldable electronic device 501 may intuitively identify that an abnormality has occurred in the battery module 540 (e.g., the first battery module 541 or the second battery module 543).

In FIG. 11 according to various embodiments, although it has been described that the control circuit 535 identifies, in operation 1110, the first voltage of the first battery module 541 and the second voltage of the second battery module 543, identifies, in operation 1120, whether a difference between the first voltage of the first battery module 541 and the second voltage of the second battery module 543 exceeds a designated voltage, and identifies, in operation 1130, whether the first voltage of the first battery module 541 is less than the second voltage of the second battery module 543, the present disclosure is not limited thereto. For example, the control circuit 535 may be a field-effect transistor (FET) having a source terminal S, a drain terminal D, and a gate terminal G. In this case, since an output of the drain terminal D is determined by a difference between a voltage input to the gate terminal G and a voltage input to the source terminal S, the control circuit 535 may control the first switching circuit 720 or the second switching circuit 725 based on a signal output to the drain terminal D instead of the aforementioned operations of identifying, thereby cutting off power of the first battery module 541 or the second battery module 543.

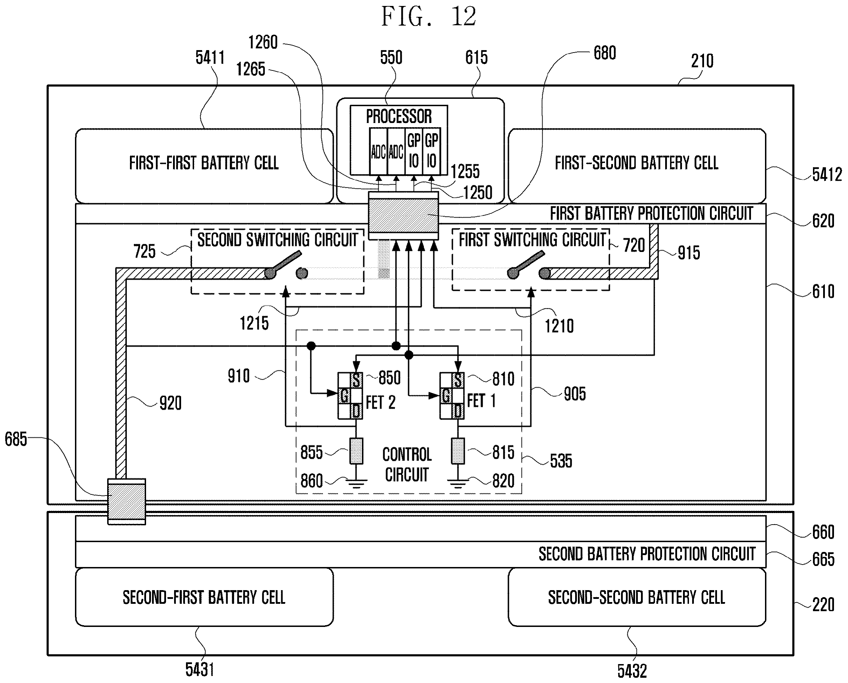

FIG. 12 is a diagram illustrating an operation method of the foldable electronic device 501 including the plurality of battery modules 541 and 543 according to one embodiment of the present disclosure.

The foldable electronic device 501 illustrated in FIG. 12 according to various embodiments is the same as the above-described foldable electronic device 501 illustrated in FIG. 9, and therefore, a description thereof may be replaced with the description related to FIG. 9. In the following description of FIG. 12, only configurations different from those of FIG. 9 will be described.

With reference to FIG. 12, a first signal 1210 and a second signal 1215 output through the control circuit (e.g., the control circuit 535 of FIG. 5) may be connected to general purpose input/output (GPIO) lines 1250 and 1255 of the processor (e.g., the processor 550 in FIG. 5). In addition, the first voltage 915 of the first battery module 541 and the second voltage 920 of the second battery module 543 may be connected to analog to digital converter (ADC) lines 1260 and 1265 of the processor 550.

In one embodiment, the memory (e.g., the memory 520 of FIG. 5) may store first state information related to the first battery module 541, second state information related to the second battery module 543, and/or third state information related to a state in which the first battery module 541 and the second battery module 543 are connected.

In one embodiment, state information (e.g., the first state information, the second state information, and the third state information) may include a capacity, a charge/discharge cycle count, a voltage, and/or a temperature of the battery module (e.g., the first battery module 541 and/or the second battery module 543). However, the present disclosure is not limited thereto.

In one embodiment, the processor 550 may also identify whether power of the first battery module 541 or the second battery module 543 has been cut off through the GPIO lines 1250 and 1255. For example, when it is identified that power of the first battery module 541 has been cut off, the processor 550 may use the second state information related to the second battery module 543 instead of the third state information related to the state in which the first battery module 541 and the second battery module 543 are connected, thereby preventing a problem such as rapid discharge of the first battery module 541. As another example, when it is identified that power of the second battery module 543 has been cut off, the processor 550 may use the third state information related to the state in which the first battery module 541 and the second battery module 543 are connected and the first state information related to the first battery module 541, thereby preventing a problem such as rapid discharge of the second battery module 543.

In one embodiment, as an abnormality (e.g., overcurrent, overcharge, over discharge, overheating, short, and/or swelling) of the first battery module 541 and/or the second battery module 543, and/or an abnormality of the second FPCB (e.g., the second FPCB 685 in FIG. 6) (e.g., a problem related to tearing of the second FPCB 685 and/or fastening of the second FPCB 685 (e.g., fastening to a second connector (e.g., the second connector 710 in FIG. 7) and/or a third connector (e.g., the third connector 715 in FIG. 7))) occurs, it is identified that power of the first battery module 541 or the second battery module 543 has been cut off, the processor 550 may provide a notification related to a cut-off of power of the battery module 540 (e.g., the first battery module 541 or the second battery module 543). The notification related to the cut-off of power of the first battery module 541 or the second battery module 543 may include a notification indicating that an abnormality has occurred in the battery module 540 (e.g., the first battery module 541 or the second battery module 543) in order to induce a user to receive an appropriate action at a service center.

In one embodiment, the processor 550 may identify the first voltage of the first battery module 541 and the second voltage of the second battery module 543 through the ADC lines 1260 and 1265. The processor 550 may identify whether an abnormality of each of the battery modules 541 and 543 has occurred based on the first voltage and the second voltage identified through the ADC lines 1260 and 1265. For example, even in case where power of the first battery module 541 and power of the second battery module 543 are not cut off through the first switching circuit 720 and/or the second switching circuit 725 under control of the control circuit 535, when the processor 550 identifies the first voltage of the first battery module 541 and the second voltage of the second battery module 543 through the ADC lines 1260 and 1265 and identifies that an abnormality of each of the battery modules 541 and 543 has occurred, the processor 550 may provide a notification indicating that an abnormality has occurred in the aforementioned battery module 540 (e.g., the first battery module 541 or the second battery module 543).

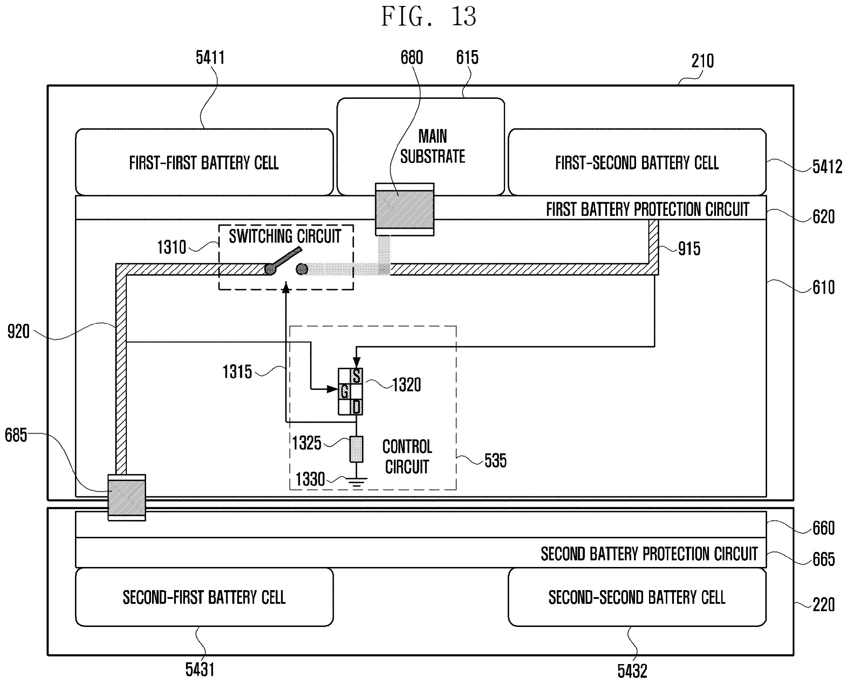

FIG. 13 is a diagram illustrating an operation method of the foldable electronic device 501 including the plurality of battery modules 541 and 543 according to one embodiment of the present disclosure.

The foldable electronic device 501 illustrated in FIG. 13 according to various embodiments is configured such that the first switching circuit 720, the first transistor 810, the first resistor 815, and the first ground 820, which are related to power control of the first battery module (e.g., the first battery module 541 in FIG. 5), are omitted compared to the above-described foldable electronic device 501 illustrated in FIG. 9.

The foldable electronic device 501 illustrated in FIG. 13 according to various embodiments is the same as the foldable electronic device 501 illustrated in FIG. 9, except that the above-described components (e.g., the first switching circuit 720, the first transistor 810, the first resistor 815, and the first ground 820) are omitted, and therefore, the description thereof may be replaced with the description related to FIG. 9. In the following description of FIG. 13, only configurations different from those of FIG. 9 will be described.

With reference to FIG. 13, a switching circuit 1310 for cutting off power of the second battery module 543 based on a difference between the first voltage 915 of the first battery module 541 and the second voltage 920 of the second battery module 543 may be disposed in the first battery circuit substrate 610.

In one embodiment, the control circuit 535 may include a transistor 1320. The transistor 1320 may be a field effect transistor (FET) having a source terminal S, a drain terminal D, and a gate terminal G.

In one embodiment, the first voltage 915 of the first battery module 541 may be delivered to the source terminal S of the transistor 1320. The second voltage 920 of the second battery module 543 may be delivered to the gate terminal G of the transistor 1320.

In one embodiment, the control circuit 535 may identify the first voltage 915 of the first battery module 541 and the second voltage 920 of the second battery module 543. When the first voltage 915 of the first battery module 541 and the second voltage 920 of the second battery module 543 are identified to be the same, the control circuit 535 may maintain the switching circuit 1310 in an on state (e.g., a short state). For example, as the first voltage 915 of the first battery module 541 and the second voltage 920 of the second battery module 543 are identified to be the same, a voltage difference between the gate terminal G and the source terminal S of the transistor 1320 may not exceed a designated voltage. Accordingly, the switching circuit 1310 may be maintained in the on state (e.g., the short state). In addition, as the first voltage 915 of the first battery module 541 and the second voltage 920 of the second battery module 543 are the same, the first signal 905 output from the first transistor 810 and the signal 1315 output from the second transistor 850 may be maintained in a low state.

However, the present disclosure is not limited thereto, and even in case where the first voltage 915 of the first battery module 541 is identified to be lower than the second voltage 920 of the second battery module 543, the control circuit 535 may maintain the switching circuit 1310 in the on state (e.g., the short state).

In one embodiment, when an abnormality of the second battery module 543 (e.g., damage (e.g., tearing) of the second FPCB 685 and/or a fastening problem in a connector (e.g., the second connector (e.g., the second connector 710 in FIG. 7) and/or the third connector (the third connector 715 in FIG. 7))) occurs, the second voltage 920 of the second battery module 543 may be lowered. As the second voltage 920 of the second battery module 543 is lowered, the second voltage 920 delivered to the gate terminal G of the transistor 1320 may be lower than the first voltage 915 of the first battery module 541 delivered to the source terminal S. In case where a voltage difference between the gate terminal G (e.g., the second voltage 920) and the source terminal S (e.g., the first voltage 915) of the transistor 1320 exceeds a designated voltage, the transistor 1320 may operate such that the second voltage 920 is applied to a resistor 1325 (e.g., a pull-down resistor), and the switching circuit 1310 may be switched to an off state (e.g., an open state). As the switching circuit 1310 is switched to the off state, power of the second battery module 543 may be cut off. In addition, as the second voltage 920 delivered to the gate terminal G of the transistor 1320 is lower than the first voltage 915 of the first battery module 541 delivered to the source terminal S, the signal 1315 output from the transistor 1320 may be switched to a high state.

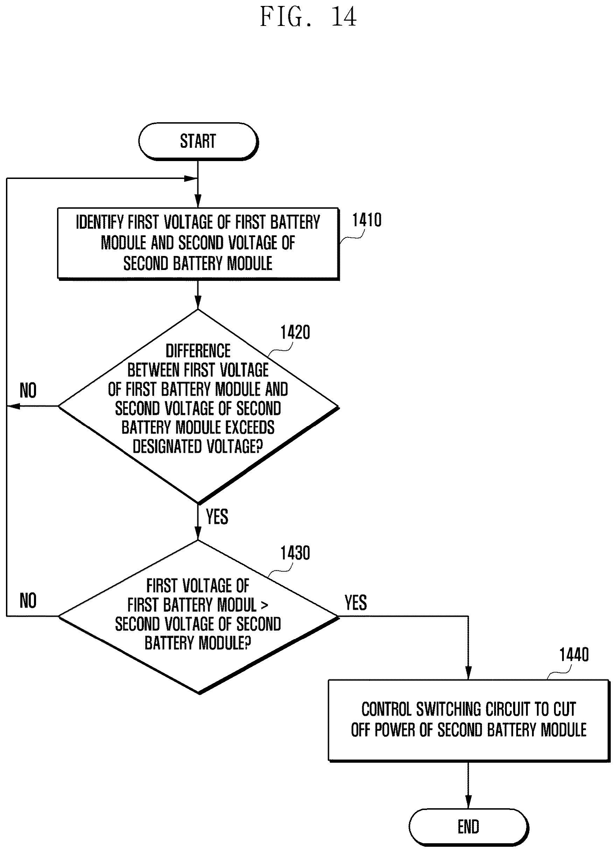

FIG. 14 is a flowchart illustrating an operation method of the foldable electronic device 501 including the plurality of battery modules 541 and 543 according to one embodiment of the present disclosure.

In the following embodiment, each operation may be sequentially performed, but is not necessarily performed sequentially. For example, an order of the respective operations may be changed, and at least two operations may be performed in parallel.

In one embodiment, operations 1410 to 1440 may be understood to be performed by the control circuit (e.g., the control circuit 535 in FIG. 5) of the foldable electronic device (e.g., the foldable electronic device 501 in FIG. 5). However, the present disclosure is not limited thereto, and operations 1410 to 1440 may also be performed by the processor (e.g., the processor 550 in FIG. 5) of the foldable electronic device 501.

With reference to FIG. 14, in operation 1410, the control circuit 535 may identify the first voltage of the first battery module (e.g., the first battery module 541 in FIG. 5) and the second voltage of the second battery module (e.g., the second battery module 543 in FIG. 5). In operation 1420, the control circuit 535 may identify whether a difference between the first voltage of the first battery module 541 and the second voltage of the second battery module 543 exceeds a designated voltage.

In one embodiment, in case where the difference between the first voltage of the first battery module 541 and the second voltage of the second battery module 543 exceeds a designated voltage (e.g., YES in operation 1420), in operation 1430, the control circuit 535 may identify that whether the first voltage of the first battery module 541 exceeds the second voltage of the second battery module 543. In case where the first voltage of the first battery module 541 exceeds the second voltage of the second battery module 543 (e.g., YES in operation 1430), in operation 1440, the control circuit 535 may control a switching circuit (e.g., the switching circuit 1310 in FIG. 13) to cut off power of the second battery module 543.

In one embodiment, in case where the difference between the first voltage of the first battery module 541 and the second voltage of the second battery module 543 does not exceed a designated voltage (e.g., NO in operation 1420), or the first voltage of the first battery module 541 does not exceed the second voltage of the second battery module 543 (e.g., NO in operation 1430), the control circuit 535 may branch to operation 1410 and perform an operation of identifying the first voltage of the first battery module 541 and the second voltage of the second battery module 543.

In one embodiment, although not illustrated, the control circuit 535 may deliver information related to a cut-off of power of the battery module 540, for example, the first battery module 541 or the second battery module 543, to the processor 550. The processor 550 may provide a notification related to a cut-off of power of the first battery module 541 or the second battery module 543 based on information related to the cut-off of power of the first battery module 541 or the second battery module 543 received from the control circuit 535. A notification related to a cut-off of power of the first battery module 541 or the second battery module 543 may include a notification indicating that an abnormality has occurred in the battery module 540 (e.g., the first battery module 541 or the second battery module 543). For example, the processor 550 may output a notification indicating that an abnormality has occurred in the battery module 540 (e.g., the first battery module 541 or the second battery module 543) to a display (e.g., the display module 160 in FIG. 1) through a popup window. For another example, the processor 550 may output, as a sound through a speaker (e.g., the acoustic output module 155 in FIG. 1), a notification indicating that an abnormality has occurred in the battery module 540 (e.g., the first battery module 541 or the second battery module 543). For another example, the processor 550 may output, as a vibration through a haptic module (e.g., the haptic module 179 in FIG. 1), a notification indicating that an abnormality has occurred in the battery module 540 (e.g., the first battery module 541 or the second battery module 543).

In FIG. 14 according to various embodiments, although it has been described that the control circuit 535 identifies, in operation 1410, the first voltage of the first battery module 541 and the second voltage of the second battery module 543, identifies, in operation 1420, whether a difference between the first voltage of the first battery module 541 and the second voltage of the second battery module 543 exceeds a designated voltage, and identifies, in operation 1430, whether the first voltage of the first battery module 541 exceeds the second voltage of the second battery module 543, the present disclosure is not limited thereto. For example, the control circuit 535 may be a field-effect transistor (FET) having a source terminal S, a drain terminal D, and a gate terminal G. In this case, since an output of the drain terminal D is determined by a difference between a voltage input to the gate terminal G and a voltage input to the source terminal S, instead of the aforementioned operations of identifying, based on a signal output to the drain terminal D, the control circuit 535 may control the aforementioned switching circuit 1310 to cut off power of the second battery module 543.

In FIGS. 5 to 14 according to various embodiments, in case where an abnormality (e.g., overcurrent, overcharge, over discharge, overheating, short, and/or swelling) of the battery module 540, for example, the first battery module 541 and/or the second battery module 543, and/or an abnormality of the second FPCB (e.g., the second FPCB 685 in FIG. 6) (e.g., a problem related to tearing of the second FPCB 685 and/or fastening of the second FPCB 685 (e.g., fastening to the second connector (e.g., the second connector 710 in FIG. 7) and/or the third connector (e.g., the third connector 715 in FIG. 7))) occurs, the first switching circuit 720 and/or the second switching circuit 725 may be controlled such that power of the first battery module 541 and/or the second battery module 543 is cut off. Accordingly, a phenomenon such as rapid discharge of the battery module 540 (e.g., the first battery module 541 and/or the second battery module 543) in which an abnormality occurs may be prevented. In addition, by providing a notification indicating that an abnormality has occurred in the battery module 540 (e.g., the first battery module 541 or the second battery module 543), a user of the foldable electronic device 501 may intuitively identify a situation in which an abnormality has occurred in the battery module 540 and may proceed with a service (e.g., replacement or repair) of the battery module 540.

Although in various embodiments described above, the foldable electronic device 501 has been described as including two battery modules, the present disclosure is not limited thereto. For example, in case of an electronic device (e.g., a smartphone having a form factor of a bar type or plate type, a tablet personal computer, a desktop personal computer, a laptop personal computer, or a wearable electronic device) other than the foldable electronic device 501, the electronic device may include one battery module including at least two battery cells. In this case, the electronic device may include at least one switching circuit for controlling (e.g., cutting off) power of at least one of the at least two battery cells included in the one battery module. The electronic device may control at least one switching circuit to cut off power of at least one battery cell based on respective voltages of the at least two battery cells.

An operation method of the foldable electronic device 501 including the plurality of battery modules 541 and 543 according to one embodiment of the present disclosure may include an operation of controlling, by the control circuit 535, the first switching circuit 720 or the second switching circuit 725 to cut off power of the first battery module 541 or the second battery module 543 based on a difference between the first voltage of the first battery module 541 and the second voltage of the second battery module 543.

The operation method of the foldable electronic device 501 including the plurality of battery modules 541 and 543 according to one embodiment may include an operation of controlling, by the control circuit 535, the first switching circuit 720 to cut off power of the first battery module 541 based on a difference between a first voltage of the first battery module 541 and a second voltage of the second battery module 543 exceeding a designated voltage and the first voltage of the first battery module 541 being less than the second voltage of the second battery module 543.

An operation of cutting off power of the first battery module 541 or the second battery module 543 according to one embodiment may include an operation of controlling the second switching circuit 725 to cut off power of the second battery module 543 based on the first voltage of the first battery module 541 not being less than the second voltage of the second battery module 543.

The operation method of the foldable electronic device 501 including the plurality of battery modules 541 and 543 according to one embodiment may further include an operation of delivering, by the control circuit 535, information related to a cut-off of power of the first battery module 541 or the second battery module 543 to the processor 550.

The operation method of the foldable electronic device 501 including the plurality of battery modules 541 and 543 according to one embodiment may further include an operation of providing, by the processor 550, a notification related to a cut-off of power of the first battery module 541 or the second battery module 543 based on information related to a cut-off of power of the first battery module 541 or the second battery module 543 received from the control circuit 535.

The memory 520 of the foldable electronic device 501 according to one embodiment may store first state information related to the first battery module 541, second state information related to the second battery module 543, and/or third state information related to a state in which the first battery module 541 and the second battery module 543 are connected.

The operation method of the foldable electronic device 501 including the plurality of battery modules 541 and 543 according to one embodiment may further include an operation of supplying, by the processor 550 of the foldable electronic device 501, power to the main substrate 615 by using the second state information or the first state information instead of the third state information when identifying that power of the first battery module 541 or the second battery module 543 is cut off.

The first battery module 541 according to one embodiment may include at least two battery cells 5411 and 5412. The second battery module 543 according to one embodiment may include at least two battery cells 5431 and 5432.

According to one embodiment, each of at least two battery cells 5411 and 5412 included in the first battery module 541 and each of at least two battery cells 5431 and 5432 included in the second battery module 543 may be identical in type and capacity.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., through wires), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A foldable electronic device (501), comprising:
a first housing (210);
a hinge module (320);
a second housing (220) mutually rotatably connected with the first housing (210) through the hinge module (320);
a main substrate (615) disposed in an internal space (2101) of the first housing (210);
a first battery module (541) disposed in the internal space (2101) of the first housing (210) and including a first battery circuit substrate (610);
a second battery module (543) disposed in an internal space (2201) of the second housing (220) and including a second battery circuit substrate (660);
a first FPCB (680) electrically connecting the main substrate (615) and the first battery circuit substrate (610);
a second FPCB (685) electrically connecting the first battery circuit substrate (610) and the second battery circuit substrate (660);
a first switching circuit (720) configured to control an electrical connection between the first battery module (541) and the main substrate (615);
a second switching circuit (725) configured to control an electrical connection between the second battery module (543) and the main substrate (615); and
a control circuit (535) disposed on the first battery circuit substrate (610),
wherein the control circuit (535) is configured to control the first switching circuit (720) or the second switching circuit (725) based on a difference between a first voltage of the first battery module (541) and a second voltage of the second battery module (543), to cut off power of the first battery module (541) or the second battery module (543).

2. The foldable electronic device (501) of claim 1, wherein the control circuit (535) is configured to control the first switching circuit (720) based on the difference between the first voltage of the first battery module (541) and the second voltage of the second battery module (543) exceeding a designated voltage and the first voltage of the first battery module (541) being less than the second voltage of the second battery module (543), to cut off power of the first battery module (541).

3. The foldable electronic device (501) of claim 1 or 2, wherein the control circuit (535) is configured to:
identify whether the difference between the first voltage of the first battery module (541) and the second voltage of the second battery module (543) exceeds the designated voltage;
when the difference between the first voltage of the first battery module (541) and the second voltage of the second battery module (543) exceeds the designated voltage,
to identify whether the first voltage of the first battery module (541) is less than the second voltage of the second battery module (543); and
based on the first voltage of the first battery module (541) not being less than the second voltage of the second battery module (543), to control the second switching circuit (725) to cut off power of the second battery module (543).

4. The foldable electronic device (501) of any of claims 1 to 3, further comprising:
a processor (550) disposed on the main substrate (615),
wherein the control circuit (535) is configured to deliver information related to a cut-off of power of the first battery module (541) or the second battery module (543) to the processor (550), and
wherein the processor (550) is configured to provide a notification related to the cut-off of power of the first battery module (541) or the second battery module (543) based on the information related to the cut-off of power of the first battery module (541) or the second battery module (543) received from the control circuit (535).

5. The foldable electronic device (501) of any of claims 1 to 4, further comprising:
a memory (520) disposed on the main substrate (615) and storing instructions; and
a processor (550) disposed on the main substrate (615),
wherein the memory (520) is configured to store first state information related to the first battery module (541), second state information related to the second battery module (543), and/or third state information related to a state in which the first battery module (541) and the second battery module (543) are connected, and
wherein the instructions, when executed by the processor (550), cause the foldable electronic device (501), when it is identified that power of the first battery module (541) or the second battery module (543) has been cut off, to supply power to the main substrate (615) by using the second state information or the first state information instead of the third state information.

6. The foldable electronic device (501) of any of claims 1 to 5, wherein the first battery module (541) comprises at least two battery cells (5411, 5412),
wherein the second battery module (543) comprises at least two battery cells (5431, 5432), and
wherein each of the at least two battery cells (5411, 5412) included in the first battery module (541) and each of the at least two battery cells (5431, 5432) included in the second battery module (543) are identical in type and capacity.

7. A foldable electronic device (501), comprising:
a first housing (210);
a hinge module (320);
a second housing (220) mutually rotatably connected with the first housing (210) through the hinge module (320);
a main substrate (615) disposed in an internal space (2101) of the first housing (210);
a first battery module (541) disposed in the internal space (2101) of the first housing (210) and including a first battery circuit substrate (610);
a second battery module (543) disposed in an internal space (2201) of the second housing (220) and including a second battery circuit substrate (660);
a first FPCB (680) electrically connecting the main substrate (615) and the first battery circuit substrate (610);
a second FPCB (685) electrically connecting the first battery circuit substrate (610) and the second battery circuit substrate (660);
a switching circuit (1310) configured to control an electrical connection between the second battery module (543) and the main substrate (615); and
a control circuit (535) disposed on the first battery circuit substrate (610),
wherein the control circuit (535) is configured to control the switching circuit (1310) based on a difference between a first voltage of the first battery module (541) and a second voltage of the second battery module (543), to cut off power of the second battery module (543).

8. The foldable electronic device (501) of claim 7, further comprising:
a second switching circuit configured to control an electrical connection between the first battery module (541) and the main substrate (615).

9. A method of operating a foldable electronic device (501) including a plurality of battery modules (541, 543), the foldable electronic device (501) comprising:
a first housing (210);
a hinge module (320);
a second housing (220) mutually rotatably connected with the first housing (210) through the hinge module (320);
a main substrate (615) disposed in an internal space (2101) of the first housing (210);
a first battery module (541) disposed in the internal space (2101) of the first housing (210) and including a first battery circuit substrate (610);
a second battery module (543) disposed in an internal space (2201) of the second housing (220) and including a second battery circuit substrate (660);
a first FPCB (680) electrically connecting the main substrate (615) and the first battery circuit substrate (610);
a second FPCB (685) electrically connecting the first battery circuit substrate (610) and the second battery circuit substrate (660);
a first switching circuit (720) configured to control an electrical connection between the first battery module (541) and the main substrate (615);
a second switching circuit (725) configured to control an electrical connection between the second battery module (543) and the main substrate (615); and
a control circuit (535) disposed on the first battery circuit substrate (610),
wherein the method comprises:
controlling, by the control circuit (535), the first switching circuit (720) or the second switching circuit (725) based on a difference between a first voltage of the first battery module (541) and a second voltage of the second battery module (543), to cut off power of the first battery module (541) or the second battery module (543).

10. The method of claim 9, further comprising:
controlling, by the control circuit (535), the first switching circuit (720) based on the difference between the first voltage of the first battery module (541) and the second voltage of the second battery module (543) exceeding a designated voltage and the first voltage of the first battery module (541) being less than the second voltage of the second battery module (543), to cut off power of the first battery module (541).

11. The method of claim 9 or 10, wherein the cutting off of power of the first battery module (541) or the second battery module (543) further comprises:
controlling, based on the first voltage of the first battery module (541) not being less than the second voltage of the second battery module (543), the second switching circuit (725) to cut off power of the second battery module (543); and
delivering, by the control circuit (535), information related to a cut-off of power of the first battery module (541) or the second battery module (543) to a processor (550).

12. The method of claim 11, further comprising:
providing, by the processor (550), a notification related to a cut-off of power of the first battery module (541) or the second battery module (543), based on the information related to the cut-off of power of the first battery module (541) or the second battery module (543) received from the control circuit (535).

13. The method of any of claims 9 to 12, wherein a memory (520) of the foldable electronic device (501) stores first state information related to the first battery module (541), second state information related to the second battery module (543), and/or third state information related to a state in which the first battery module (541) and the second battery module (543) are connected.

14. The method of claim 13, further comprising:
when power of the first battery module (541) or the second battery module (543) is identified by the processor (550) of the foldable electronic device (501) to be cut off,
supplying power to the main substrate (615) by using the second state information or the first state information instead of the third state information.

15. The method of any of claims 9 to 14, wherein the first battery module (541) comprises at least two battery cells (5411, 5412),
wherein the second battery module (543) comprises at least two battery cells (5431, 5432), and
wherein each of the at least two battery cells (5411, 5412) included in the first battery module (541) and each of the at least two battery cells (5431, 5432) included in the second battery module (543) are identical in type and capacity.
